# EUROPEAN PATENT SPECIFICATION

(11) **EP 4 564 154 B1**
(45) Date of publication and mention of the grant of the patent: **28.10.2026**
(21) Application number: 25162256.9
(22) Date of filing: 27.09.2022
(51) Int. Cl.: G10L 15/22, G10L 15/32, G06F 3/16, G10L 15/08

(54) **CONFLICT MANAGEMENT FOR WAKE-WORD DETECTION PROCESSES**
KONFLIKTVERWALTUNG FÜR WAKE-WORD-DETEKTIONSVERFAHREN
GESTION DE CONFLIT POUR DES PROCESSUS DE DÉTECTION DE MOT DE RÉVEIL

(30) Priority: 30.09.2021 US 202163261889 P
(43) Date of publication of application: 04.06.2025
(62) Document number(s) of the earlier application(s) in accordance with Art. 76 EPC: 22801298.5 / 4 409 571
(73) Proprietor: Sonos Inc., Goleta, CA 93117 (US)
(72) Inventor: DUREAU, Joseph, Goleta, 93117 (US)
(74) Representative: EIP

(56) References cited:
- WO-A1-2020/218650
- US-A1- 2019 043 492
- US-A1- 2020 090 646
- US-A1- 2020 194 001
- US-A1- 2020 258 513

## Description

The present technology relates to consumer goods and, more particularly, to methods, systems, products, features, services, and other elements directed to voice-controllable media playback systems or some aspect thereof.

Options for accessing and listening to digital audio in an out-loud setting were limited until in 2003, when SONOS, Inc. filed for one of its first patent applications, entitled "Method for Synchronizing Audio Playback between Multiple Networked Devices," and began offering a media playback system for sale in 2005. The SONOS Wireless HiFi System enables people to experience music from many sources via one or more networked playback devices. Through a software control application installed on a smartphone, tablet, or computer, one can play what he or she wants in any room that has a networked playback device. Additionally, using a controller, for example, different songs can be streamed to each room that has a playback device, rooms can be grouped together for synchronous playback, or the same song can be heard in all rooms synchronously.

Given the ever-growing interest in digital media, there continues to be a need to develop consumer-accessible technologies to further enhance the listening experience.
US2020/258513 describes a system and method for distributing voice processing and analysing sound detected by a microphone array. The method disclosed involves identifying that a detected sound contains either a first or second wake word based on analysis via first and second wake word engines.
US2020/194001 describes a system and method for optimising voice detection based on a selected voice assistant service including setting a second configuration when it is determined that a second voice assistant service is to be used instead of a first voice assistant service.
US2020/090646 describes a playback device configured to identify wake words via a wake word engine in a sound detected by a microphone. When a false wake word is detected the wake word engine is deactivated for a period of time.
US2019/043492 describes detecting, in audio content, wake words for different voice service, and disabling the wake response to the detected wake words during playback of the audio content.
WO2020/218650 describes an artificial intelligence device for receiving a voice input and when a wake-word for setting an operation mode is recognized after a first wake word is recognized for calling the artificial intelligence device, processing one or more instructions that follow the second wake word.
Aspects of the invention are defined in appended independent claims.

### BRIEF DESCRIPTION OF THE DRAWINGS

Features, aspects, and advantages of the presently disclosed technology may be better understood with regard to the following description, appended claims, and accompanying drawings.
Figure 1A is a partial cutaway view of an environment having a media playback system configured in accordance with aspects of the disclosed technology.
Figure 1B is a schematic diagram of the media playback system of Figure 1A and one or more networks.
Figure 2A is a functional block diagram of an example playback device.
Figure 2B is an isometric diagram of an example housing of the playback device of Figure 2A.
Figure 2C is a diagram of another example housing for the playback device of Figure 2A.
Figure 2D is a diagram of another example housing for the playback device of Figure 2A.
Figure 2E is a diagram of another example housing for the playback device of Figure 2A.
Figures 3A-3E are diagrams showing example playback device configurations in accordance with aspects of the disclosure.
Figure 4A is a functional block diagram of an example controller device in accordance with aspects of the disclosure.
Figures 4B and 4C are controller interfaces in accordance with aspects of the disclosure.
Figure 5 is a functional block diagram of certain components of an example network microphone device in accordance with aspects of the disclosure.
Figure 6A is a diagram of an example voice input.
Figure 6B is a graph depicting an example sound specimen in accordance with aspects of the disclosure.
Figure 7 is a diagram of an example voice input with multiple wake-word events.
Figure 8 is a functional block diagram of multiple network microphone devices in accordance with aspects of the disclosure.
Figure 9 is a flow chart of an example process for managing conflict in detection of multiple wake words.

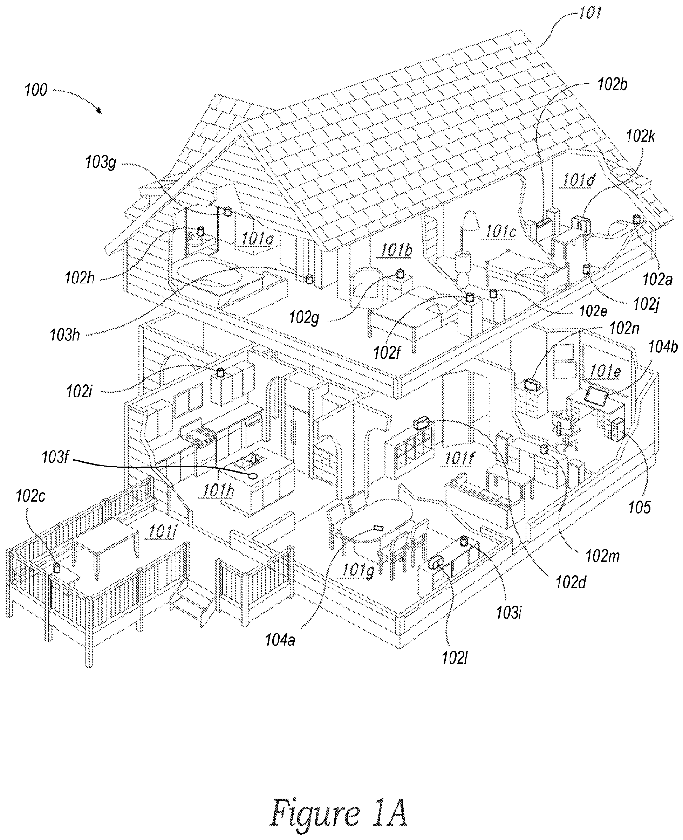

The drawings are for purposes of illustrating various examples, but it should be understood that the inventions are not limited to the arrangements and instrumentality shown in the drawings. In the drawings, identical reference numbers identify at least generally similar elements. To facilitate the discussion of any particular element, the most significant digit or digits of any reference number refers to the Figure in which that element is first introduced. For example, element 103a is first introduced and discussed with reference to Figure 1A.

### DETAILED DESCRIPTION

### I. Overview

Voice control can be beneficial in a "smart" home that includes smart appliances and devices that are connected to a communication network, such as wireless audio playback devices, illumination devices, and home-automation devices (e.g., thermostats, door locks, etc.). In some implementations, network microphone devices may be used to control smart home devices.

A network microphone device ("NMD") is a networked computing device that typically includes an arrangement of microphones, such as a microphone array, that is configured to detect sounds present in the NMD's environment. The detected sound may include a person's speech mixed with background noise (e.g., music being output by a playback device or other ambient noise). In practice, an NMD typically filters detected sound to remove the background noise from the person's speech to facilitate identifying whether the speech contains a voice input indicative of voice control. If so, the NMD may take action based on such a voice input.

An NMD often employs a wake-word engine, which is typically onboard the NMD, to identify whether sound detected by the NMD contains a voice input that includes a particular wake word. The wake-word engine may be configured to identify (i.e., "spot") a particular wake word using one or more identification algorithms. This wake-word identification process is commonly referred to as "keyword spotting." In practice, to help facilitate keyword spotting, the NMD may buffer sound detected by a microphone of the NMD and then use the wake-word engine to process that buffered sound to determine whether a wake word is present.

When a wake-word engine spots a wake word in detected sound, the NMD may determine that a wake-word event (i.e., a "wake-word trigger") has occurred, which indicates that the NMD has detected sound that includes a potential voice input. The occurrence of the wake-word event typically causes the NMD to perform additional processes involving the detected sound. In some implementations, these additional processes may include outputting an alert (e.g., an audible chime and/or a light indicator) indicating that a wake word has been identified and extracting detected-sound data from a buffer, among other possible additional processes. Extracting the detected sound may include reading out and packaging a stream of the detected-sound according to a particular format and transmitting the packaged sound-data to an appropriate voice-assistant service (VAS) for interpretation.

In turn, the VAS corresponding to the wake word that was identified by the wake-word engine receives the transmitted sound data from the NMD over a communication network. A VAS traditionally takes the form of a remote service implemented using one or more cloud servers configured to process voice inputs (e.g., AMAZON's ALEXA, APPLE's SIRI, MICROSOFT's CORTANA, GOOGLE'S ASSISTANT, etc.). In some instances, certain components and functionality of the VAS may be distributed across local and remote devices. Additionally, or alternatively, a VAS may take the form of a local service implemented at an NMD or a media playback system comprising the NMD such that a voice input or certain types of voice input (e.g., rudimentary commands) are processed locally without intervention from a remote VAS.

In any case, when a VAS receives detected-sound data, the VAS will typically process this data, which involves identifying the voice input and determining an intent of words captured in the voice input. The VAS may then provide a response back to the NMD with some instruction according to the determined intent. Based on that instruction, the NMD may cause one or more smart devices to perform an action. For example, in accordance with an instruction from a VAS, an NMD may cause a playback device to play a particular song or an illumination device to turn on/off, among other examples. In some cases, an NMD, or a media system with NMDs (e.g., a media playback system with NMD-equipped playback devices) may be configured to interact with multiple VASes. In practice, the NMD may select one VAS over another based on the particular wake word identified in the sound detected by the NMD.

In some implementations, a playback device that is configured to be part of a networked media playback system may include components and functionality of an NMD (i.e., the playback device is "NMD-equipped"). In this respect, such a playback device may include a microphone that is configured to detect sounds present in the playback device's environment, such as people speaking, audio being output by the playback device itself or another playback device that is nearby, or other ambient noises, and may also include components for buffering detected sound to facilitate wake-word identification.

Some NMD-equipped playback devices may include an internal power source (e.g., a rechargeable battery) that allows the playback device to operate without being physically connected to a wall electrical outlet or the like. In this regard, such a playback device may be referred to herein as a "portable playback device." Some portable playback devices may be configured to be wearable, such as a headphone device (e.g., in-ear, around-ear, or over-ear headphones). On the other hand, playback devices that are configured to rely on power from a wall electrical outlet or the like may be referred to herein as "stationary playback devices," although such devices may in fact be moved around a home or other environment. In practice, a person might often take a portable playback device to and from a home or other environment in which one or more stationary playback devices remain.

In some cases, multiple voice services are configured for the NMD, or a system of NMDs (e.g., a media playback system of playback devices). One or more services can be configured during a set-up procedure, and additional voice services can be configured for the system later on. As such, the NMD acts as an interface with multiple voice services, perhaps alleviating a need to have an NMD from each of the voice services to interact with the respective voice services. Yet further, the NMD can operate in concert with service-specific NMDs present in a household to process a given voice command.

Where two or more voice services are configured for the NMD, a particular voice service can be invoked by utterance of a wake word corresponding to the particular voice service. For instance, in querying AMAZON, a user might speak the wake word "Alexa" followed by a voice command. Other examples include "Ok, Google" for querying GOOGLE and "Hey, Siri" for querying APPLE.

In some cases, a generic wake word can be used to indicate a voice input to an NMD. In some cases, this is a manufacturer-specific wake word rather than a wake word tied to any particular voice service (e.g., "Hey, Sonos" where the NMD is a SONOS playback device). Given such a wake word, the NMD can identify a particular voice service to process the request. For instance, if the voice input following the wake word is related to a particular type of command (e.g., music playback), then the voice input is sent to a particular voice service associated with that type of command (e.g. a streaming music service having voice command capabilities).

Inaccurate detection of wake words can lead to several problems. Failing to detect a wake word (i.e., a false negative) when one was uttered by a user can lead to user frustration and the inability to perform the requested commands. Additionally, detecting a wake word when the user did not intend to invoke a VAS (i.e., a false positive) can be particularly problematic. Since invoking a wake word typically triggers a voice extraction process, in which audio is captured by the NMD and transmitted to remote computing devices associated with a VAS, the user's privacy is jeopardized if an NMD detects a wake word when the user did not utter one. Such false positives may lead to a VAS receiving captured audio that was not intended by the user to be recorded or shared with the VAS, thereby violating the user's expectation of privacy.

The problem of false positives can be particularly pronounced in multi-VAS configurations, in which a single NMD (or multiple NMDs within a shared environment) is configured to detect multiple different wake words that are associated with different VASes. For example, if the user is intending to interact with a first VAS while the NMD erroneously detects a wake word associated with a different VAS, there may be a risk of both VASes being concurrently active. This may result in user confusion and frustration if one VAS interrupts the other (e.g., while a user is asking the AMAZON VAS for the weather, both the GOOGLE VAS and AMAZON VAS attempt to output an audible answer in response). Moreover, concurrent activation of multiple VASes could result in a user's input intended for a first VAS to be inadvertently routed to a second VAS. Such a process runs contrary to the user's expectations, and undesirably erodes the user's privacy by sharing the captured audio with entities that the user has not selected. This can be particularly pronounced if the user intends to interact with a local VAS (e.g., a Sonos VAS if the NMD is a Sonos device, in which the NMD can perform local commands in response to voice input without necessarily transmitting recorded audio to remote computing devices). In such instances, a user interacting with a local VAS does not expect her voice input to be transmitted over a wide area network to cloud-based servers, and as such performing this action in response to erroneous detection of a wake word associated with a remote VAS frustrates the user's expectations of privacy.

To address these and other problems, the present technology includes systems and methods for managing conflict in detection of multiple wake words in a user's voice input. For example, an NMD may include two or more wake-word engines that are each configured to detect a different wake word (or set of wake-words) associated with different VASes. Each wake-word engine can monitor microphone input signals continuously for its wake word(s) and generate a wake-word event if an appropriate wake word is detected. However, rather than each wake-word engine operating wholly independently, a wake-word detection conflict manager can be utilized to intercept any wake-word event and evaluate whether another wake-word event was also detected within a particular period of time (e.g., within 50 milliseconds, within 500 milliseconds, within 1 second, etc.). If the wake-word conflict manager determines that two wake-word events occurred within the predetermined period of time, then both wake-word events can be discarded. This reflects the assessment that detection of two distinct wake-words within such a short period of time likely indicates that at least one of the wake-word events is a false positive. Accordingly, to avoid frustrating the user by invoking an undesired VAS and/or risking cross-talk between two distinct VASes, the conflict manager can discard both wake-word events, and optionally output to the user an indication that no wake word was detected (e.g., a chime or text-to-speech output indicating that no wake word was detected). In some examples, one or both wake-word engines can be temporarily disabled, powered down, or otherwise prohibited from generating wake-word events based on incoming sound data for a period of time (e.g., 500 milliseconds, 1 second, 5 seconds, 10 seconds, 30 seconds, etc.) following the detection of a conflict. After the period of time, one or all of the wake word engines on the NMD (or across multiple NMDs) can be re-enabled.

Although several examples disclosed herein relate to a single NMD having multiple wake-word engines thereon, each of which can be associated with a distinct VAS, in some instances the methods and systems described herein can be utilized across multiple NMDs, with different NMDs equipped to detect different wake words and to communicate with different VASes.

While some examples described herein may refer to functions performed by given actors, such as "users" and/or other entities, it should be understood that this description is for purposes of explanation only. The claims should not be interpreted to require action by any such example actor unless explicitly required by the language of the claims themselves.

### II. Example Operating Environment

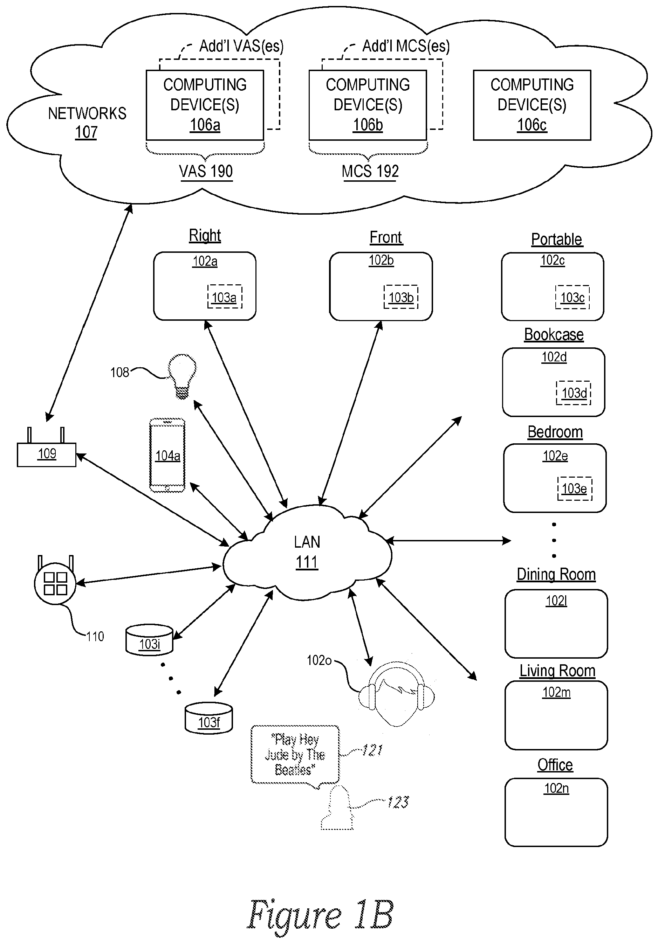

Figures 1A and 1B illustrate an example configuration of a media playback system 100 (or "MPS 100") in which one or more examples disclosed herein may be implemented. Referring first to Figure 1A, the MPS 100 as shown is associated with an example home environment having a plurality of rooms and spaces, which may be collectively referred to as a "home environment," "smart home," or "environment 101." The environment 101 comprises a household having several rooms, spaces, and/or playback zones, including a master bathroom 101a, a master bedroom 101b (referred to herein as "Nick's Room"), a second bedroom 101c, a family room or den 101d, an office 101e, a living room 101f, a dining room 101g, a kitchen 101h, and an outdoor patio 101i. While certain examples are described below in the context of a home environment, the technologies described herein may be implemented in other types of environments. In some examples, for instance, the MPS 100 can be implemented in one or more commercial settings (e.g., a restaurant, mall, airport, hotel, a retail or other store), one or more vehicles (e.g., a sports utility vehicle, bus, car, a ship, a boat, an airplane), multiple environments (e.g., a combination of home and vehicle environments), and/or another suitable environment where multi-zone audio may be desirable.

Within these rooms and spaces, the MPS 100 includes one or more computing devices. Referring to Figures 1A and 1B together, such computing devices can include playback devices 102 (identified individually as playback devices 102a-102o), network microphone devices 103 (identified individually as "NMDs" 103a-102i), and controller devices 104a and 104b (collectively "controller devices 104"). Referring to Figure 1B, the home environment may include additional and/or other computing devices, including local network devices, such as one or more smart illumination devices 108 (Figure 1B), a smart thermostat 110, and a local computing device 105 (Figure 1A). In examples described below, one or more of the various playback devices 102 may be configured as portable playback devices, while others may be configured as stationary playback devices. For example, the headphones 102o (Figure 1B) are a portable playback device, while the playback device 102d on the bookcase may be a stationary device. As another example, the playback device 102c on the Patio may be a battery-powered device, which may allow it to be transported to various areas within the environment 101, and outside of the environment 101, when it is not plugged in to a wall outlet or the like.

With reference still to Figure 1B, the various playback, network microphone, and controller devices 102-104 and/or other network devices of the MPS 100 may be coupled to one another via point-to-point connections and/or over other connections, which may be wired and/or wireless, via a LAN 111 including a network router 109. For example, the playback device 102j in the Den 101d (Figure 1A), which may be designated as the "Left" device, may have a point-to-point connection with the playback device 102a, which is also in the Den 101d and may be designated as the "Right" device. In a related example, the Left playback device 102j may communicate with other network devices, such as the playback device 102b, which may be designated as the "Front" device, via a point-to-point connection and/or other connections via the LAN 111.

As further shown in Figure 1B, the MPS 100 may be coupled to one or more remote computing devices 106 via a wide area network ("WAN") 107. In some examples, each remote computing device 106 may take the form of one or more cloud servers. The remote computing devices 106 may be configured to interact with computing devices in the environment 101 in various ways. For example, the remote computing devices 106 may be configured to facilitate streaming and/or controlling playback of media content, such as audio, in the home environment 101.

In some implementations, the various playback devices, NMDs, and/or controller devices 102-104 may be communicatively coupled to at least one remote computing device associated with a VAS and at least one remote computing device associated with a media content service ("MCS"). For instance, in the illustrated example of Figure 1B, remote computing devices 106a are associated with a VAS 190 and remote computing devices 106b are associated with an MCS 192. Although only a single VAS 190 and a single MCS 192 are shown in the example of Figure 1B for purposes of clarity, the MPS 100 may be coupled to multiple, different VASes and/or MCSes. In some implementations, VASes may be operated by one or more of AMAZON, GOOGLE, APPLE, MICROSOFT, SONOS or other voice assistant providers. In some implementations, MCSes may be operated by one or more of SPOTIFY, PANDORA, AMAZON MUSIC, or other media content services.

As further shown in Figure 1B, the remote computing devices 106 further include remote computing device 106c configured to perform certain operations, such as remotely facilitating media playback functions, managing device and system status information, directing communications between the devices of the MPS 100 and one or multiple VASes and/or MCSes, among other operations. In one example, the remote computing devices 106c provide cloud servers for one or more SONOS Wireless HiFi Systems.

In various implementations, one or more of the playback devices 102 may take the form of or include an on-board (e.g., integrated) network microphone device. For example, the playback devices 102a-e include or are otherwise equipped with corresponding NMDs 103a-e, respectively. A playback device that includes or is equipped with an NMD may be referred to herein interchangeably as a playback device or an NMD unless indicated otherwise in the description. In some cases, one or more of the NMDs 103 may be a stand-alone device. For example, the NMDs 103f and 103g may be stand-alone devices. A stand-alone NMD may omit components and/or functionality that is typically included in a playback device, such as a speaker or related electronics. For instance, in such cases, a stand-alone NMD may not produce audio output or may produce limited audio output (e.g., relatively low-quality audio output).

The various playback and network microphone devices 102 and 103 of the MPS 100 may each be associated with a unique name, which may be assigned to the respective devices by a user, such as during setup of one or more of these devices. For instance, as shown in the illustrated example of Figure 1B, a user may assign the name "Bookcase" to playback device 102d because it is physically situated on a bookcase. Similarly, the NMD 103f may be assigned the named "Island" because it is physically situated on an island countertop in the Kitchen 101h (Figure 1A). Some playback devices may be assigned names according to a zone or room, such as the playback devices 102e, 102l, 102m, and 102n, which are named "Bedroom," "Dining Room," "Living Room," and "Office," respectively. Further, certain playback devices may have functionally descriptive names. For example, the playback devices 102a and 102b are assigned the names "Right" and "Front," respectively, because these two devices are configured to provide specific audio channels during media playback in the zone of the Den 101d (Figure 1A). The playback device 102c in the Patio may be named portable because it is battery-powered and/or readily transportable to different areas of the environment 101. Other naming conventions are possible.

As discussed above, an NMD may detect and process sound from its environment, such as sound that includes background noise mixed with speech spoken by a person in the NMD's vicinity. For example, as sounds are detected by the NMD in the environment, the NMD may process the detected sound to determine if the sound includes speech that contains voice input intended for the NMD and ultimately a particular VAS. For example, the NMD may identify whether speech includes a wake word associated with a particular VAS.

In the illustrated example of Figure 1B, the NMDs 103 are configured to interact with the VAS 190 over a network via the LAN 111 and the router 109. Interactions with the VAS 190 may be initiated, for example, when an NMD identifies in the detected sound a potential wake word. The identification causes a wake-word event, which in turn causes the NMD to begin transmitting detected-sound data to the VAS 190. In some implementations, the various local network devices 102-105 (Figure 1A) and/or remote computing devices 106c of the MPS 100 may exchange various feedback, information, instructions, and/or related data with the remote computing devices associated with the selected VAS. Such exchanges may be related to or independent of transmitted messages containing voice inputs. In some examples, the remote computing device(s) and the media playback system 100 may exchange data via communication paths as described herein and/or using a metadata exchange channel as described in U.S. Application No. 15/438,749 filed February 21, 2017, and titled "Voice Control of a Media Playback System".

Upon receiving the stream of sound data, the VAS 190 determines if there is voice input in the streamed data from the NMD, and if so the VAS 190 will also determine an underlying intent in the voice input. The VAS 190 may next transmit a response back to the MPS 100, which can include transmitting the response directly to the NMD that caused the wake-word event. The response is typically based on the intent that the VAS 190 determined was present in the voice input. As an example, in response to the VAS 190 receiving a voice input with an utterance to "Play Hey Jude by The Beatles," the VAS 190 may determine that the underlying intent of the voice input is to initiate playback and further determine that intent of the voice input is to play the particular song "Hey Jude." After these determinations, the VAS 190 may transmit a command to a particular MCS 192 to retrieve content (i.e., the song "Hey Jude"), and that MCS 192, in turn, provides (e.g., streams) this content directly to the MPS 100 or indirectly via the VAS 190. In some implementations, the VAS 190 may transmit to the MPS 100 a command that causes the MPS 100 itself to retrieve the content from the MCS 192.

In certain implementations, NMDs may facilitate arbitration amongst one another when voice input is identified in speech detected by two or more NMDs located within proximity of one another. For example, the NMD-equipped playback device 102d in the environment 101 (Figure 1A) is in relatively close proximity to the NMD-equipped Living Room playback device 102m, and both devices 102d and 102m may at least sometimes detect the same sound. In such cases, this may require arbitration as to which device is ultimately responsible for providing detected-sound data to the remote VAS. Examples of arbitrating between NMDs may be found, for example, in previously referenced U.S. Application No. 15/438,749.

In certain implementations, an NMD may be assigned to, or otherwise associated with, a designated or default playback device that may not include an NMD. For example, the Island NMD 103f in the Kitchen 101h (Figure 1A) may be assigned to the Dining Room playback device 102l, which is in relatively close proximity to the Island NMD 103f. In practice, an NMD may direct an assigned playback device to play audio in response to a remote VAS receiving a voice input from the NMD to play the audio, which the NMD might have sent to the VAS in response to a user speaking a command to play a certain song, album, playlist, etc. Additional details regarding assigning NMDs and playback devices as designated or default devices may be found, for example, in previously referenced U.S. Patent Application No. 15/438,749.

Further aspects relating to the different components of the example MPS 100 and how the different components may interact to provide a user with a media experience may be found in the following sections. While discussions herein may generally refer to the example MPS 100, technologies described herein are not limited to applications within, among other things, the home environment described above. For instance, the technologies described herein may be useful in other home environment configurations comprising more or fewer of any of the playback, network microphone, and/or controller devices 102-104. For example, the technologies herein may be utilized within an environment having a single playback device 102 and/or a single NMD 103. In some examples of such cases, the LAN 111 (Figure 1B) may be eliminated and the single playback device 102 and/or the single NMD 103 may communicate directly with the remote computing devices 106a-d. In some examples, a telecommunication network (e.g., an LTE network, a 5G network, etc.) may communicate with the various playback, network microphone, and/or controller devices 102-104 independent of a LAN.

### a. Example Playback & Network Microphone Devices

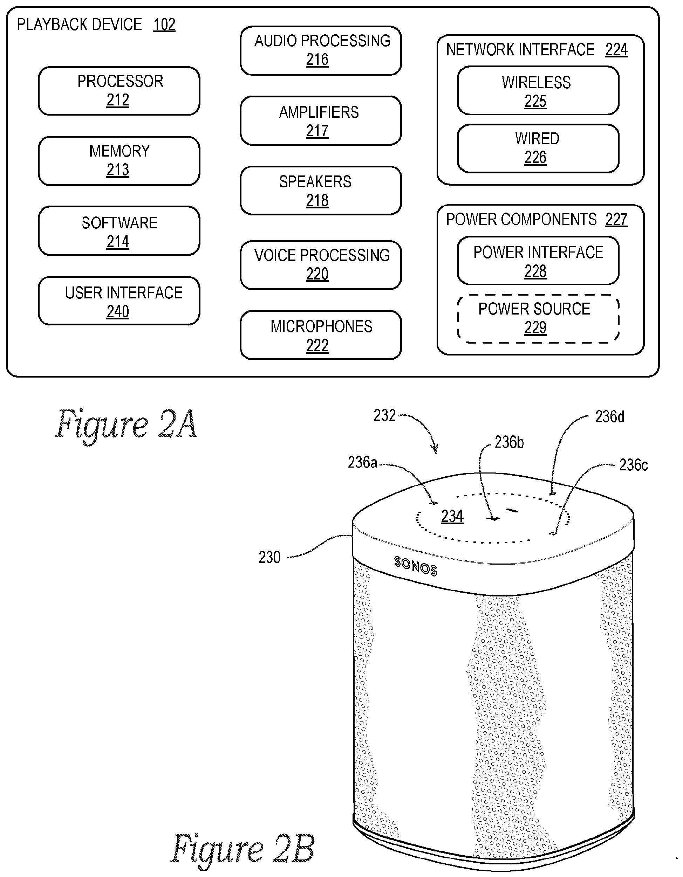

Figure 2A is a functional block diagram illustrating certain aspects of one of the playback devices 102 of the MPS 100 of Figures 1A and 1B. As shown, the playback device 102 includes various components, each of which is discussed in further detail below, and the various components of the playback device 102 may be operably coupled to one another via a system bus, communication network, or some other connection mechanism. In the illustrated example of Figure 2A, the playback device 102 may be referred to as an "NMD-equipped" playback device because it includes components that support the functionality of an NMD, such as one of the NMDs 103 shown in Figure 1A.

As shown, the playback device 102 includes at least one processor 212, which may be a clock-driven computing component configured to process input data according to instructions stored in memory 213. The memory 213 may be a tangible, non-transitory, computer-readable medium configured to store instructions that are executable by the processor 212. For example, the memory 213 may be data storage that can be loaded with software code 214 that is executable by the processor 212 to achieve certain functions.

In one example, these functions may involve the playback device 102 retrieving audio data from an audio source, which may be another playback device. In another example, the functions may involve the playback device 102 sending audio data, detected-sound data (e.g., corresponding to a voice input), and/or other information to another device on a network via at least one network interface 224. In yet another example, the functions may involve the playback device 102 causing one or more other playback devices to synchronously playback audio with the playback device 102. In yet a further example, the functions may involve the playback device 102 facilitating being paired or otherwise bonded with one or more other playback devices to create a multi-channel audio environment. Numerous other example functions are possible, some of which are discussed below.

As just mentioned, certain functions may involve the playback device 102 synchronizing playback of audio content with one or more other playback devices. During synchronous playback, a listener may not perceive time-delay differences between playback of the audio content by the synchronized playback devices. U.S. Patent No. 8,234,395 filed on April 4, 2004, and titled "System and method for synchronizing operations among a plurality of independently clocked digital data processing devices," provides in more detail some examples for audio playback synchronization among playback devices.

To facilitate audio playback, the playback device 102 includes audio processing components 216 that are generally configured to process audio prior to the playback device 102 rendering the audio. In this respect, the audio processing components 216 may include one or more digital-to-analog converters ("DAC"), one or more audio preprocessing components, one or more audio enhancement components, one or more digital signal processors ("DSPs"), and so on. In some implementations, one or more of the audio processing components 216 may be a subcomponent of the processor 212. In operation, the audio processing components 216 receive analog and/or digital audio and process and/or otherwise intentionally alter the audio to produce audio signals for playback.

The produced audio signals may then be provided to one or more audio amplifiers 217 for amplification and playback through one or more speakers 218 operably coupled to the amplifiers 217. The audio amplifiers 217 may include components configured to amplify audio signals to a level for driving one or more of the speakers 218.

Each of the speakers 218 may include an individual transducer (e.g., a "driver") or the speakers 218 may include a complete speaker system involving an enclosure with one or more drivers. A particular driver of a speaker 218 may include, for example, a subwoofer (e.g., for low frequencies), a mid-range driver (e.g., for middle frequencies), and/or a tweeter (e.g., for high frequencies). In some cases, a transducer may be driven by an individual corresponding audio amplifier of the audio amplifiers 217. In some implementations, a playback device may not include the speakers 218, but instead may include a speaker interface for connecting the playback device to external speakers. In certain examples, a playback device may include neither the speakers 218 nor the audio amplifiers 217, but instead may include an audio interface (not shown) for connecting the playback device to an external audio amplifier or audio-visual receiver.

In addition to producing audio signals for playback by the playback device 102, the audio processing components 216 may be configured to process audio to be sent to one or more other playback devices, via the network interface 224, for playback. In example scenarios, audio content to be processed and/or played back by the playback device 102 may be received from an external source, such as via an audio line-in interface (e.g., an auto-detecting 3.5mm audio line-in connection) of the playback device 102 (not shown) or via the network interface 224, as described below.

As shown, the at least one network interface 224, may take the form of one or more wireless interfaces 225 and/or one or more wired interfaces 226. A wireless interface may provide network interface functions for the playback device 102 to wirelessly communicate with other devices (e.g., other playback device(s), NMD(s), and/or controller device(s)) in accordance with a communication protocol (e.g., any wireless standard including IEEE 802.11a, 802.11b, 802.11g, 802.11n, 802.11ac, 802.15, 4G mobile communication standard, and so on). A wired interface may provide network interface functions for the playback device 102 to communicate over a wired connection with other devices in accordance with a communication protocol (e.g., IEEE 802.3). While the network interface 224 shown in Figure 2A include both wired and wireless interfaces, the playback device 102 may in some implementations include only wireless interface(s) or only wired interface(s).

In general, the network interface 224 facilitates data flow between the playback device 102 and one or more other devices on a data network. For instance, the playback device 102 may be configured to receive audio content over the data network from one or more other playback devices, network devices within a LAN, and/or audio content sources over a WAN, such as the Internet. In one example, the audio content and other signals transmitted and received by the playback device 102 may be transmitted in the form of digital packet data comprising an Internet Protocol (IP)-based source address and IP-based destination addresses. In such a case, the network interface 224 may be configured to parse the digital packet data such that the data destined for the playback device 102 is properly received and processed by the playback device 102.

As shown in Figure 2A, the playback device 102 also includes voice processing components 220 that are operably coupled to one or more microphones 222. The microphones 222 are configured to detect sound (i.e., acoustic waves) in the environment of the playback device 102, which is then provided to the voice processing components 220. More specifically, each microphone 222 is configured to detect sound and convert the sound into a digital or analog signal representative of the detected sound, which can then cause the voice processing component 220 to perform various functions based on the detected sound, as described in greater detail below. In one implementation, the microphones 222 are arranged as an array of microphones (e.g., an array of six microphones). In some implementations, the playback device 102 includes more than six microphones (e.g., eight microphones or twelve microphones) or fewer than six microphones (e.g., four microphones, two microphones, or a single microphones).

In operation, the voice-processing components 220 are generally configured to detect and process sound received via the microphones 222, identify potential voice input in the detected sound, and extract detected-sound data to enable a VAS, such as the VAS 190 (Figure 1B), to process voice input identified in the detected-sound data. The voice processing components 220 may include one or more analog-to-digital converters, an acoustic echo canceller ("AEC"), a spatial processor (e.g., one or more multi-channel Wiener filters, one or more other filters, and/or one or more beam former components), one or more buffers (e.g., one or more circular buffers), one or more wake-word engines, one or more voice extractors, and/or one or more speech processing components (e.g., components configured to recognize a voice of a particular user or a particular set of users associated with a household), among other example voice processing components. In example implementations, the voice processing components 220 may include or otherwise take the form of one or more DSPs or one or more modules of a DSP. In this respect, certain voice processing components 220 may be configured with particular parameters (e.g., gain and/or spectral parameters) that may be modified or otherwise tuned to achieve particular functions. In some implementations, one or more of the voice processing components 220 may be a subcomponent of the processor 212.

In some implementations, the voice-processing components 220 may detect and store a user's voice profile, which may be associated with a user account of the MPS 100. For example, voice profiles may be stored as and/or compared to variables stored in a set of command information or data table. The voice profile may include aspects of the tone or frequency of a user's voice and/or other unique aspects of the user's voice, such as those described in previously referenced U.S. Patent Application No. 15/438,749.

As further shown in Figure 2A, the playback device 102 also includes power components 227. The power components 227 include at least an external power source interface 228, which may be coupled to a power source (not shown) via a power cable or the like that physically connects the playback device 102 to an electrical outlet or some other external power source. Other power components may include, for example, transformers, converters, and like components configured to format electrical power.

In some implementations, the power components 227 of the playback device 102 may additionally include an internal power source 229 (e.g., one or more batteries) configured to power the playback device 102 without a physical connection to an external power source. When equipped with the internal power source 229, the playback device 102 may operate independent of an external power source. In some such implementations, the external power source interface 228 may be configured to facilitate charging the internal power source 229. As discussed before, a playback device comprising an internal power source may be referred to herein as a "portable playback device." On the other hand, a playback device that operates using an external power source may be referred to herein as a "stationary playback device," although such a device may in fact be moved around a home or other environment.

The playback device 102 further includes a user interface 240 that may facilitate user interactions independent of or in conjunction with user interactions facilitated by one or more of the controller devices 104. In various examples, the user interface 240 includes one or more physical buttons and/or supports graphical interfaces provided on touch sensitive screen(s) and/or surface(s), among other possibilities, for a user to directly provide input. The user interface 240 may further include one or more of lights (e.g., LEDs) and the speakers to provide visual and/or audio feedback to a user.

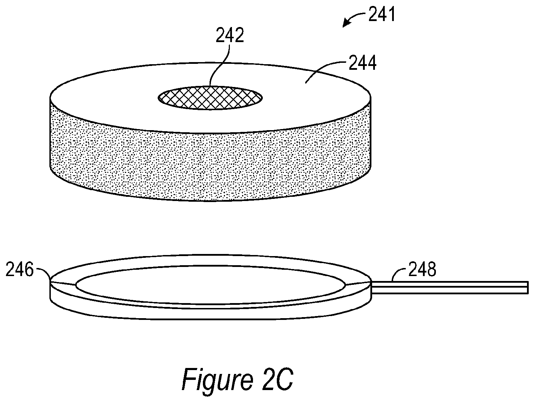

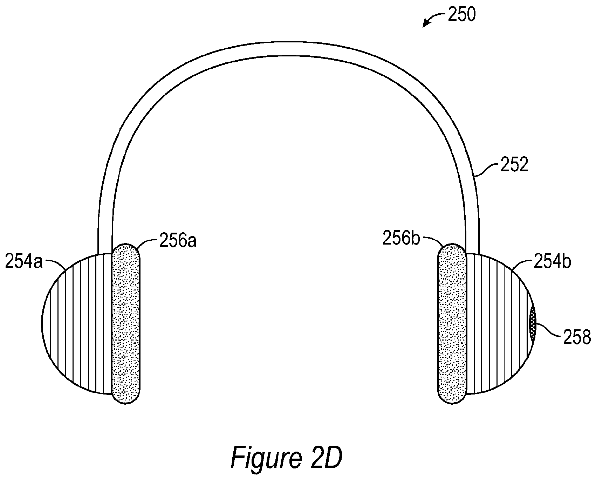

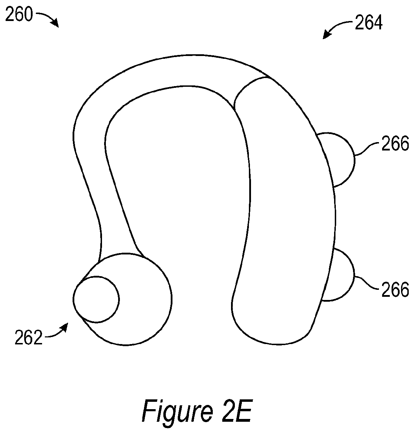

As an illustrative example, Figure 2Bshows an example housing 230 of the playback device 102 that includes a user interface in the form of a control area 232 at a top portion 234 of the housing 230. The control area 232 includes buttons 236a-c for controlling audio playback, volume level, and other functions. The control area 232 also includes a button 236d for toggling the microphones 222 to either an on state or an off state.

As further shown in Figure 2B, the control area 232 is at least partially surrounded by apertures formed in the top portion 234 of the housing 230 through which the microphones 222 (not visible in Figure 2B) receive the sound in the environment of the playback device 102. The microphones 222 may be arranged in various positions along and/or within the top portion 234 or other areas of the housing 230 so as to detect sound from one or more directions relative to the playback device 102.

As mentioned above, the playback device 102 may be constructed as a portable playback device, such as an ultra-portable playback device, that comprises an internal power source. Figure 2C shows an example housing 241 for such a portable playback device. As shown, the housing 241 of the portable playback device includes a user interface in the form of a control area 242 at a top portion 244 of the housing 241. The control area 242 may include a capacitive touch sensor for controlling audio playback, volume level, and other functions. The housing 241 of the portable playback device may be configured to engage with a dock 246 that is connected to an external power source via cable 248. The dock 246 may be configured to provide power to the portable playback device to recharge an internal battery. In some examples, the dock 246 may comprise a set of one or more conductive contacts (not shown) positioned on the top of the dock 246 that engage with conductive contacts on the bottom of the housing 241 (not shown). In other examples, the dock 246 may provide power from the cable 248 to the portable playback device without the use of conductive contacts. For example, the dock 246 may wirelessly charge the portable playback device via one or more inductive coils integrated into each of the dock 246 and the portable playback device.

In some examples, the playback device 102 may take the form of a wired and/or wireless headphone (e.g., an over-ear headphone, an on-ear headphone, or an in-ear headphone). For instance, Figure 2D shows an example housing 250 for such an implementation of the playback device 102. As shown, the housing 250 includes a headband 252 that couples a first earpiece 254a to a second earpiece 254b. Each of the earpieces 254a and 254b may house any portion of the electronic components in the playback device, such as one or more speakers, and one or more microphones. In some instances, the housing 250 can enclose or carry one or more microphones. Further, one or more of the earpieces 254a and 254b may include a control area 258 for controlling audio playback, volume level, and other functions. The control area 258 may comprise any combination of the following: a capacitive touch sensor, a button, a switch, and a dial. As shown in Figure 2D, the housing 250 may further include ear cushions 256a and 256b that are coupled to earpieces 254a and 254b, respectively. The ear cushions 256a and 256b may provide a soft barrier between the head of a user and the earpieces 254a and 254b, respectively, to improve user comfort and/or provide acoustic isolation from the ambient (e.g., passive noise reduction (PNR)). In some implementations, the wired and/or wireless headphones may be ultra-portable playback devices that are powered by an internal energy source and weigh less than fifty ounces.

In some examples, the playback device 102 may take the form of an in-ear headphone device. For instance, Figure 2E shows an example housing 260 for such an implementation of the playback device 102. As shown, the housing 260 includes an in-ear portion 262 configured to be disposed in or adjacent a user's ear, and an over-ear portion 264 configured to extend over and behind a user's ear. The housing 260 may house any portion of the electronic components in the playback device, such as one or more audio transducers, microphones, and audio processing components. A plurality of control areas 266 can facilitate user input for controlling audio playback, volume level, noise cancellation, pairing with other devices, and other functions. The control area 258 may comprise any combination of the following: one or more buttons, switches, dials, capacitive touch sensors, etc.

It should be appreciated that the playback device 102 may take the form of other wearable devices separate and apart from a headphone. Wearable devices may include those devices configured to be worn about a portion of a subject (e.g., a head, a neck, a torso, an arm, a wrist, a finger, a leg, an ankle, etc.). For example, the playback device 102 may take the form of a pair of glasses including a frame front (e.g., configured to hold one or more lenses), a first temple rotatably coupled to the frame front, and a second temple rotatable coupled to the frame front. In this example, the pair of glasses may comprise one or more transducers integrated into at least one of the first and second temples and configured to project sound towards an ear of the subject.

While specific implementations of playback and network microphone devices have been described above with respect to Figures 2A, 2B, 2C, 2D, and 2E, there are numerous configurations of devices, including, but not limited to, those having no UI, microphones in different locations, multiple microphone arrays positioned in different arrangements, and/or any other configuration as appropriate to the requirements of a given application. For example, UIs and/or microphone arrays can be implemented in other playback devices and/or computing devices rather than those described herein. Further, although a specific example of playback device 102 is described with reference to MPS 100, one skilled in the art will recognize that playback devices as described herein can be used in a variety of different environments, including (but not limited to) environments with more and/or fewer elements, without departing from this invention. Likewise, MPSs as described herein can be used with various different playback devices.

By way of illustration, SONOS, Inc. presently offers (or has offered) for sale certain playback devices that may implement certain of the examples disclosed herein, including a "SONOS ONE," "PLAY:1," "PLAY:3," "PLAY:5," "PLAYBAR," "AMP," "CONNECT:AMP," "PLAYBASE," "BEAM," "CONNECT," and "SUB." Any other past, present, and/or future playback devices may additionally or alternatively be used to implement the playback devices of examples disclosed herein. Additionally, it should be understood that a playback device is not limited to the examples illustrated in Figures 2A, 2B, 2C, or 2D or to the SONOS product offerings. For example, a playback device may be integral to another device or component such as a television, a lighting fixture, or some other device for indoor or outdoor use.

### b. Example Playback Device Configurations

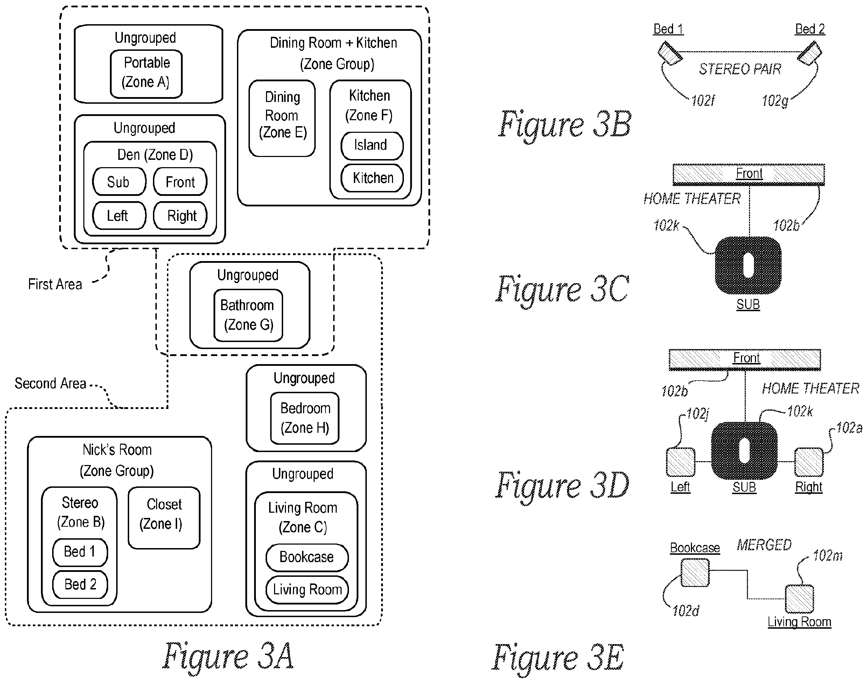

Figures 3A-3E show example configurations of playback devices. Referring first to Figure 3A, in some example instances, a single playback device may belong to a zone. For example, the playback device 102c (Figure 1A) on the Patio may belong to Zone A. In some implementations described below, multiple playback devices may be "bonded" to form a "bonded pair," which together form a single zone. For example, the playback device 102f (Figure 1A) named "Bed 1" in Figure 3A may be bonded to the playback device 102g (Figure 1A) named "Bed 2" in Figure 3A to form Zone B. Bonded playback devices may have different playback responsibilities (e.g., channel responsibilities). In another implementation described below, multiple playback devices may be merged to form a single zone. For example, the playback device 102d named "Bookcase" may be merged with the playback device 102m named "Living Room" to form a single Zone C. The merged playback devices 102d and 102m may not be specifically assigned different playback responsibilities. That is, the merged playback devices 102d and 102m may, aside from playing audio content in synchrony, each play audio content as they would if they were not merged.

For purposes of control, each zone in the MPS 100 may be represented as a single user interface ("UI") entity. For example, as displayed by the controller devices 104, Zone A may be provided as a single entity named "Portable," Zone B may be provided as a single entity named "Stereo," and Zone C may be provided as a single entity named "Living Room."

In various examples, a zone may take on the name of one of the playback devices belonging to the zone. For example, Zone C may take on the name of the Living Room device 102m (as shown). In another example, Zone C may instead take on the name of the Bookcase device 102d. In a further example, Zone C may take on a name that is some combination of the Bookcase device 102d and Living Room device 102m. The name that is chosen may be selected by a user via inputs at a controller device 104. In some examples, a zone may be given a name that is different than the device(s) belonging to the zone. For example, Zone B in Figure 3A is named "Stereo" but none of the devices in Zone B have this name. In one aspect, Zone B is a single UI entity representing a single device named "Stereo," composed of constituent devices "Bed 1" and "Bed 2." In one implementation, the Bed 1 device may be playback device 102f in the master bedroom 101h (Figure 1A) and the Bed 2 device may be the playback device 102g also in the master bedroom 101h (Figure 1A).

As noted above, playback devices that are bonded may have different playback responsibilities, such as playback responsibilities for certain audio channels. For example, as shown in Figure 3B, the Bed 1 and Bed 2 devices 102f and 102g may be bonded so as to produce or enhance a stereo effect of audio content. In this example, the Bed 1 playback device 102f may be configured to play a left channel audio component, while the Bed 2 playback device 102g may be configured to play a right channel audio component. In some implementations, such stereo bonding may be referred to as "pairing."

Additionally, playback devices that are configured to be bonded may have additional and/or different respective speaker drivers. As shown in Figure 3C, the playback device 102b named "Front" may be bonded with the playback device 102k named "SUB." The Front device 102b may render a range of mid to high frequencies, and the SUB device 102k may render low frequencies as, for example, a subwoofer. When unbonded, the Front device 102b may be configured to render a full range of frequencies. As another example, Figure 3D shows the Front and SUB devices 102b and 102k further bonded with Right and Left playback devices 102a and 102j, respectively. In some implementations, the Right and Left devices 102a and 102j may form surround or "satellite" channels of a home theater system. The bonded playback devices 102a, 102b, 102j, and 102k may form a single Zone D (Figure 3A).

In some implementations, playback devices may also be "merged." In contrast to certain bonded playback devices, playback devices that are merged may not have assigned playback responsibilities but may each render the full range of audio content that each respective playback device is capable of. Nevertheless, merged devices may be represented as a single UI entity (i.e., a zone, as discussed above). For instance, Figure 3E shows the playback devices 102d and 102m in the Living Room merged, which would result in these devices being represented by the single UI entity of Zone C. In one example, the playback devices 102d and 102m may playback audio in synchrony, during which each outputs the full range of audio content that each respective playback device 102d and 102m is capable of rendering.

In some examples, a stand-alone NMD may be in a zone by itself. For example, the NMD 103h from Figure 1A is named "Closet" and forms Zone I in Figure 3A. An NMD may also be bonded or merged with another device so as to form a zone. For example, the NMD device 103f named "Island" may be bonded with the playback device 102i Kitchen, which together form Zone F, which is also named "Kitchen." Additional details regarding assigning NMDs and playback devices as designated or default devices may be found, for example, in previously referenced U.S. Patent Application No. 15/438,749. In some examples, a stand-alone NMD may not be assigned to a zone.

Zones of individual, bonded, and/or merged devices may be arranged to form a set of playback devices that playback audio in synchrony. Such a set of playback devices may be referred to as a "group," "zone group," "synchrony group," or "playback group." In response to inputs provided via a controller device 104, playback devices may be dynamically grouped and ungrouped to form new or different groups that synchronously play back audio content. For example, referring to Figure 3A, Zone A may be grouped with Zone B to form a zone group that includes the playback devices of the two zones. As another example, Zone A may be grouped with one or more other Zones C-I. The Zones A-I may be grouped and ungrouped in numerous ways. For example, three, four, five, or more (e.g., all) of the Zones A-I may be grouped. When grouped, the zones of individual and/or bonded playback devices may play back audio in synchrony with one another, as described in previously referenced U.S. Patent No. 8,234,395. Grouped and bonded devices are example types of associations between portable and stationary playback devices that may be caused in response to a trigger event, as discussed above and described in greater detail below.

In various implementations, the zones in an environment may be assigned a particular name, which may be the default name of a zone within a zone group or a combination of the names of the zones within a zone group, such as "Dining Room + Kitchen," as shown in Figure 3A. In some examples, a zone group may be given a unique name selected by a user, such as "Nick's Room," as also shown in Figure 3A. The name "Nick's Room" may be a name chosen by a user over a prior name for the zone group, such as the room name "Master Bedroom."

Referring back to Figure 2A, certain data may be stored in the memory 213 as one or more state variables that are periodically updated and used to describe the state of a playback zone, the playback device(s), and/or a zone group associated therewith. The memory 213 may also include the data associated with the state of the other devices of the media playback system 100, which may be shared from time to time among the devices so that one or more of the devices have the most recent data associated with the system.

In some examples, the memory 213 of the playback device 102 may store instances of various variable types associated with the states. Variables instances may be stored with identifiers (e.g., tags) corresponding to type. For example, certain identifiers may be a first type "a1" to identify playback device(s) of a zone, a second type "b1" to identify playback device(s) that may be bonded in the zone, and a third type "c1" to identify a zone group to which the zone may belong. As a related example, in Figure 1A, identifiers associated with the Patio may indicate that the Patio is the only playback device of a particular zone and not in a zone group. Identifiers associated with the Living Room may indicate that the Living Room is not grouped with other zones but includes bonded playback devices 102a, 102b, 102j, and 102k. Identifiers associated with the Dining Room may indicate that the Dining Room is part of Dining Room + Kitchen group and that devices 103f and 102i are bonded. Identifiers associated with the Kitchen may indicate the same or similar information by virtue of the Kitchen being part of the Dining Room + Kitchen zone group. Other example zone variables and identifiers are described below.

In yet another example, the MPS 100 may include variables or identifiers representing other associations of zones and zone groups, such as identifiers associated with Areas, as shown in Figure 3A. An Area may involve a cluster of zone groups and/or zones not within a zone group. For instance, Figure 3A shows a first area named "First Area" and a second area named "Second Area." The First Area includes zones and zone groups of the Patio, Den, Dining Room, Kitchen, and Bathroom. The Second Area includes zones and zone groups of the Bathroom, Nick's Room, Bedroom, and Living Room. In one aspect, an Area may be used to invoke a cluster of zone groups and/or zones that share one or more zones and/or zone groups of another cluster. In this respect, such an Area differs from a zone group, which does not share a zone with another zone group. Further examples of techniques for implementing Areas may be found, for example, in U.S. Application No. 15/682,506 filed August 21, 2017 and titled "Room Association Based on Name," and U.S. Patent No. 8,483,853 filed September 11, 2007, and titled "Controlling and manipulating groupings in a multi-zone media system." In some examples, the MPS 100 may not implement Areas, in which case the system may not store variables associated with Areas.

The memory 213 may be further configured to store other data. Such data may pertain to audio sources accessible by the playback device 102 or a playback queue that the playback device (or some other playback device(s)) may be associated with. In examples described below, the memory 213 is configured to store a set of command data for selecting a particular VAS when processing voice inputs.

During operation, one or more playback zones in the environment of Figure 1A may each be playing different audio content. For instance, the user may be grilling in the Patio zone and listening to hip hop music being played by the playback device 102c, while another user may be preparing food in the Kitchen zone and listening to classical music being played by the playback device 102i. In another example, a playback zone may play the same audio content in synchrony with another playback zone. For instance, the user may be in the Office zone where the playback device 102n is playing the same hip-hop music that is being playing by playback device 102c in the Patio zone. In such a case, playback devices 102c and 102n may be playing the hip-hop in synchrony such that the user may seamlessly (or at least substantially seamlessly) enjoy the audio content that is being played out-loud while moving between different playback zones. Synchronization among playback zones may be achieved in a manner similar to that of synchronization among playback devices, as described in previously referenced U.S. Patent No. 8,234,395.

As suggested above, the zone configurations of the MPS 100 may be dynamically modified. As such, the MPS 100 may support numerous configurations. For example, if a user physically moves one or more playback devices to or from a zone, the MPS 100 may be reconfigured to accommodate the change(s). For instance, if the user physically moves the playback device 102c from the Patio zone to the Office zone, the Office zone may now include both the playback devices 102c and 102n. In some cases, the user may pair or group the moved playback device 102c with the Office zone and/or rename the players in the Office zone using, for example, one of the controller devices 104 and/or voice input. As another example, if one or more playback devices 102 are moved to a particular space in the home environment that is not already a playback zone, the moved playback device(s) may be renamed or associated with a playback zone for the particular space.

Further, different playback zones of the MPS 100 may be dynamically combined into zone groups or split up into individual playback zones. For example, the Dining Room zone and the Kitchen zone may be combined into a zone group for a dinner party such that playback devices 102i and 102l may render audio content in synchrony. As another example, bonded playback devices in the Den zone may be split into (i) a television zone and (ii) a separate listening zone. The television zone may include the Front playback device 102b. The listening zone may include the Right, Left, and SUB playback devices 102a, 102j, and 102k, which may be grouped, paired, or merged, as described above. Splitting the Den zone in such a manner may allow one user to listen to music in the listening zone in one area of the living room space, and another user to watch the television in another area of the living room space. In a related example, a user may utilize either of the NMD 103a or 103b (Figure 1B) to control the Den zone before it is separated into the television zone and the listening zone. Once separated, the listening zone may be controlled, for example, by a user in the vicinity of the NMD 103a, and the television zone may be controlled, for example, by a user in the vicinity of the NMD 103b. As described above, however, any of the NMDs 103 may be configured to control the various playback and other devices of the MPS 100.

### c. Example Controller Devices

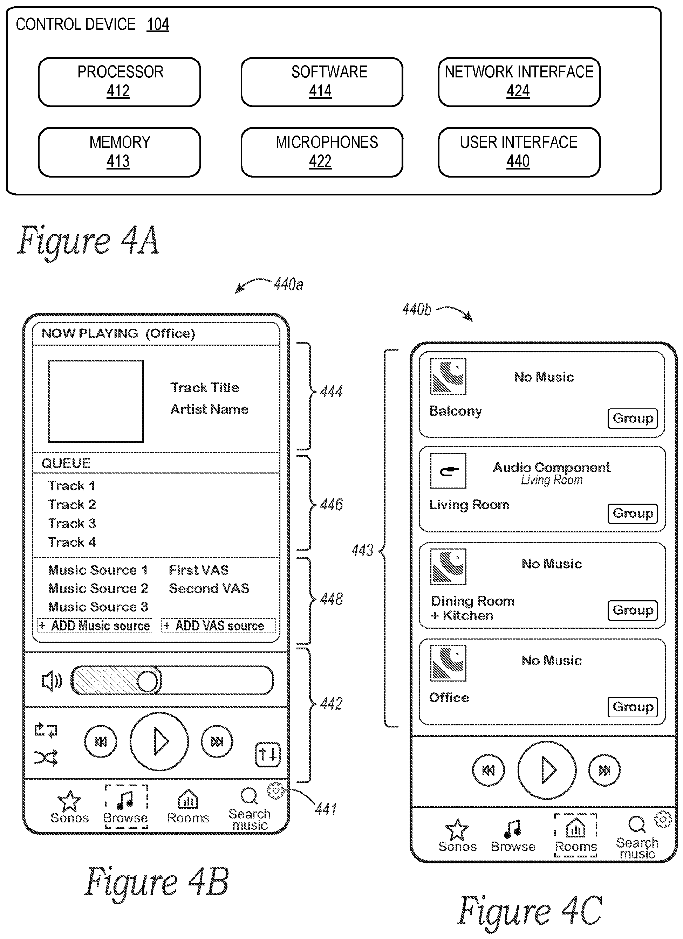

Figure 4A is a functional block diagram illustrating certain aspects of a selected one of the controller devices 104 of the MPS 100 of Figure 1A. Such controller devices may also be referred to herein as a "control device" or "controller." The controller device shown in Figure 4A may include components that are generally similar to certain components of the network devices described above, such as a processor 412, memory 413 storing program software 414, at least one network interface 424, and one or more microphones 422. In one example, a controller device may be a dedicated controller for the MPS 100. In another example, a controller device may be a network device on which media playback system controller application software may be installed, such as for example, an iPhone^{™}, iPad^{™} or any other smart phone, tablet, or network device (e.g., a networked computer such as a PC or Mac^{™}).

The memory 413 of the controller device 104 may be configured to store controller application software and other data associated with the MPS 100 and/or a user of the system 100. The memory 413 may be loaded with instructions in software 414 that are executable by the processor 412 to achieve certain functions, such as facilitating user access, control, and/or configuration of the MPS 100. The controller device 104 is configured to communicate with other network devices via the network interface 424, which may take the form of a wireless interface, as described above.

In one example, system information (e.g., such as a state variable) may be communicated between the controller device 104 and other devices via the network interface 424. For instance, the controller device 104 may receive playback zone and zone group configurations in the MPS 100 from a playback device, an NMD, or another network device. Likewise, the controller device 104 may transmit such system information to a playback device or another network device via the network interface 424. In some cases, the other network device may be another controller device.

The controller device 104 may also communicate playback device control commands, such as volume control and audio playback control, to a playback device via the network interface 424. As suggested above, changes to configurations of the MPS 100 may also be performed by a user using the controller device 104. The configuration changes may include adding/removing one or more playback devices to/from a zone, adding/removing one or more zones to/from a zone group, forming a bonded or merged player, separating one or more playback devices from a bonded or merged player, among others.

As shown in Figure 4A, the controller device 104 also includes a user interface 440 that is generally configured to facilitate user access and control of the MPS 100. The user interface 440 may include a touch-screen display or other physical interface configured to provide various graphical controller interfaces, such as the controller interfaces 440a and 440b shown in Figures 4B and 4C. Referring to Figures 4B and 4C together, the controller interfaces 440a and 440b includes a playback control region 442, a playback zone region 443, a playback status region 444, a playback queue region 446, and a sources region 448. The user interface as shown is just one example of an interface that may be provided on a network device, such as the controller device shown in Figure 4A, and accessed by users to control a media playback system, such as the MPS 100. Other user interfaces of varying formats, styles, and interactive sequences may alternatively be implemented on one or more network devices to provide comparable control access to a media playback system.

The playback control region 442 (Figure 4B) may include selectable icons (e.g., by way of touch or by using a cursor) that, when selected, cause playback devices in a selected playback zone or zone group to play or pause, fast forward, rewind, skip to next, skip to previous, enter/exit shuffle mode, enter/exit repeat mode, enter/exit cross fade mode, etc. The playback control region 442 may also include selectable icons that, when selected, modify equalization settings and/or playback volume, among other possibilities.

The playback zone region 443 (Figure 4C) may include representations of playback zones within the MPS 100. The playback zones regions 443 may also include a representation of zone groups, such as the Dining Room + Kitchen zone group, as shown. In some examples, the graphical representations of playback zones may be selectable to bring up additional selectable icons to manage or configure the playback zones in the MPS 100, such as a creation of bonded zones, creation of zone groups, separation of zone groups, and renaming of zone groups, among other possibilities.

For example, as shown, a "group" icon may be provided within each of the graphical representations of playback zones. The "group" icon provided within a graphical representation of a particular zone may be selectable to bring up options to select one or more other zones in the MPS 100 to be grouped with the particular zone. Once grouped, playback devices in the zones that have been grouped with the particular zone will be configured to play audio content in synchrony with the playback device(s) in the particular zone. Analogously, a "group" icon may be provided within a graphical representation of a zone group. In this case, the "group" icon may be selectable to bring up options to deselect one or more zones in the zone group to be removed from the zone group. Other interactions and implementations for grouping and ungrouping zones via a user interface are also possible. The representations of playback zones in the playback zone region 443 (Figure 4C) may be dynamically updated as playback zone or zone group configurations are modified.

The playback status region 444 (Figure 4B) may include graphical representations of audio content that is presently being played, previously played, or scheduled to play next in the selected playback zone or zone group. The selected playback zone or zone group may be visually distinguished on a controller interface, such as within the playback zone region 443 and/or the playback status region 444. The graphical representations may include track title, artist name, album name, album year, track length, and/or other relevant information that may be useful for the user to know when controlling the MPS 100 via a controller interface.

The playback queue region 446 may include graphical representations of audio content in a playback queue associated with the selected playback zone or zone group. In some examples, each playback zone or zone group may be associated with a playback queue comprising information corresponding to zero or more audio items for playback by the playback zone or zone group. For instance, each audio item in the playback queue may comprise a uniform resource identifier (URI), a uniform resource locator (URL), or some other identifier that may be used by a playback device in the playback zone or zone group to find and/or retrieve the audio item from a local audio content source or a networked audio content source, which may then be played back by the playback device.

In one example, a playlist may be added to a playback queue, in which case information corresponding to each audio item in the playlist may be added to the playback queue. In another example, audio items in a playback queue may be saved as a playlist. In a further example, a playback queue may be empty, or populated but "not in use" when the playback zone or zone group is playing continuously streamed audio content, such as Internet radio that may continue to play until otherwise stopped, rather than discrete audio items that have playback durations. In an alternative example, a playback queue can include Internet radio and/or other streaming audio content items and be "in use" when the playback zone or zone group is playing those items. Other examples are also possible.

When playback zones or zone groups are "grouped" or "ungrouped," playback queues associated with the affected playback zones or zone groups may be cleared or re-associated. For example, if a first playback zone including a first playback queue is grouped with a second playback zone including a second playback queue, the established zone group may have an associated playback queue that is initially empty, that contains audio items from the first playback queue (such as if the second playback zone was added to the first playback zone), that contains audio items from the second playback queue (such as if the first playback zone was added to the second playback zone), or a combination of audio items from both the first and second playback queues. Subsequently, if the established zone group is ungrouped, the resulting first playback zone may be re-associated with the previous first playback queue or may be associated with a new playback queue that is empty or contains audio items from the playback queue associated with the established zone group before the established zone group was ungrouped. Similarly, the resulting second playback zone may be re-associated with the previous second playback queue or may be associated with a new playback queue that is empty or contains audio items from the playback queue associated with the established zone group before the established zone group was ungrouped. Other examples are also possible.

With reference still to Figures 4B and 4C, the graphical representations of audio content in the playback queue region 446 (Figure 4B) may include track titles, artist names, track lengths, and/or other relevant information associated with the audio content in the playback queue. In one example, graphical representations of audio content may be selectable to bring up additional selectable icons to manage and/or manipulate the playback queue and/or audio content represented in the playback queue. For instance, a represented audio content may be removed from the playback queue, moved to a different position within the playback queue, or selected to be played immediately, or after any currently playing audio content, among other possibilities. A playback queue associated with a playback zone or zone group may be stored in a memory on one or more playback devices in the playback zone or zone group, on a playback device that is not in the playback zone or zone group, and/or some other designated device. Playback of such a playback queue may involve one or more playback devices playing back media items of the queue, perhaps in sequential or random order.

The sources region 448 may include graphical representations of selectable audio content sources and/or selectable voice assistants associated with a corresponding VAS. The VASes may be selectively assigned. In some examples, multiple VASes, such as AMAZON's Alexa, MICROSOFT's Cortana, etc., may be invokable by the same NMD. In some examples, a user may assign a VAS exclusively to one or more NMDs. For example, a user may assign a first VAS to one or both of the NMDs 102a and 102b in the Living Room shown in Figure 1A, and a second VAS to the NMD 103f in the Kitchen. Other examples are possible.

### d. Example Audio Content Sources

The audio sources in the sources region 448 may be audio content sources from which audio content may be retrieved and played by the selected playback zone or zone group. One or more playback devices in a zone or zone group may be configured to retrieve for playback audio content (e.g., according to a corresponding URI or URL for the audio content) from a variety of available audio content sources. In one example, audio content may be retrieved by a playback device directly from a corresponding audio content source (e.g., via a line-in connection). In another example, audio content may be provided to a playback device over a network via one or more other playback devices or network devices. As described in greater detail below, in some examples, audio content may be provided by one or more media content services.

Example audio content sources may include a memory of one or more playback devices in a media playback system such as the MPS 100 of Figure 1, local music libraries on one or more network devices (e.g., a controller device, a network-enabled personal computer, or a networked-attached storage ("NAS")), streaming audio services providing audio content via the Internet (e.g., cloud-based music services), or audio sources connected to the media playback system via a line-in input connection on a playback device or network device, among other possibilities.

In some examples, audio content sources may be added or removed from a media playback system such as the MPS 100 of Figure 1A. In one example, an indexing of audio items may be performed whenever one or more audio content sources are added, removed, or updated. Indexing of audio items may involve scanning for identifiable audio items in all folders/directories shared over a network accessible by playback devices in the media playback system and generating or updating an audio content database comprising metadata (e.g., title, artist, album, track length, among others) and other associated information, such as a URI or URL for each identifiable audio item found. Other examples for managing and maintaining audio content sources may also be possible.

### e. Example Network Microphone Devices

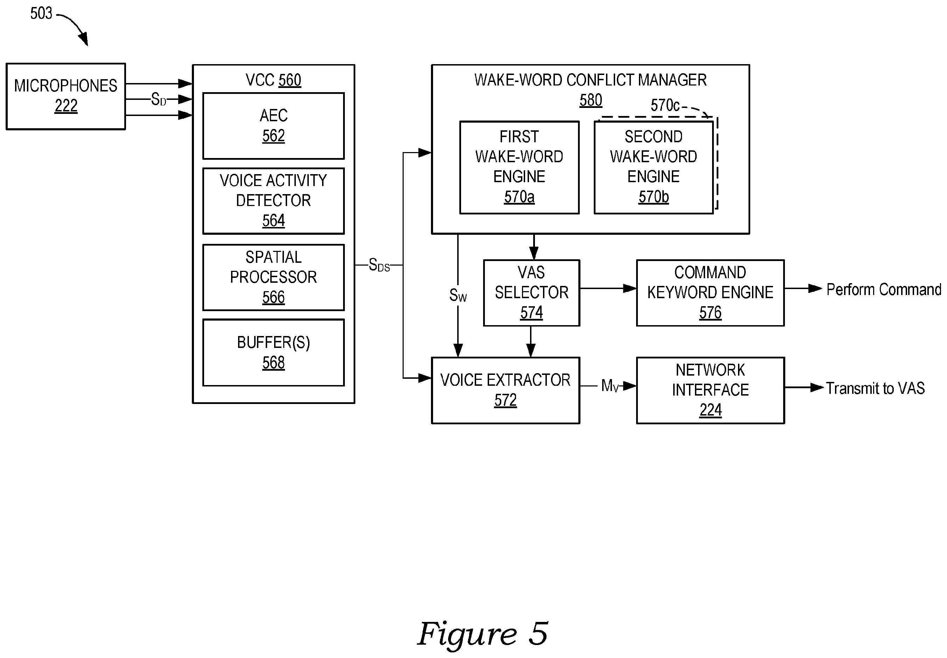

Figure 5 is a functional block diagram showing an NMD 503 configured in accordance with examples of the disclosure. The NMD 503 includes voice capture components ("VCC", or collectively "voice processor 560"), a wake-word engine 570, and at least one voice extractor 572, each of which is operably coupled to the voice processor 560. The NMD 503 further includes the microphones 222 and the at least one network interface 224 described above and may also include other components, such as audio amplifiers, interface, etc., which are not shown in Figure 5 for purposes of clarity.

The microphones 222 of the NMD 503 are configured to provide detected sound, S_{D}, from the environment of the NMD 503 to the voice processor 560. The detected sound S_{D} may take the form of one or more analog or digital signals. In example implementations, the detected sound S_{D} may be composed of a plurality signals associated with respective channels 562 that are fed to the voice processor 560.

Each channel 562 may correspond to a particular microphone 222. For example, an NMD having six microphones may have six corresponding channels. Each channel of the detected sound S_{D} may bear certain similarities to the other channels but may differ in certain regards, which may be due to the position of the given channel's corresponding microphone relative to the microphones of other channels. For example, one or more of the channels of the detected sound S_{D} may have a greater signal to noise ratio ("SNR") of speech to background noise than other channels.

As further shown in Figure 5, the voice processor 560 includes acoustic echo cancellation components (AEC) 562, voice activity detector (VAD) components 564, a spatial processor 566, and one or more buffers 568. In operation, the AEC 562 receives the detected sound S_{D} and filters or otherwise processes the sound to suppress echoes and/or to otherwise improve the quality of the detected sound S_{D}. That processed sound may then be passed to the spatial processor 566.

During operations of the NMD 503, the voice activity detector 550 can process the detected sound S_{D} to determine whether speech is present. Certain operations may be performed only if voice activity is detected. In various examples, the voice activity detector 550 may perform certain processing functions such that the input to the voice activity detector 550 is not identical to the output provided to downstream components within the VCC 560. For example, the voice activity detector 550 may buffer and/or time-delay the signal, may perform channel selection, or any other suitable pre-processing steps. If, voice activity is not identified in the detected sound S_{D} via the voice activity detector 550, then the further processing steps may be forgone. For example, the sound data may not be passed to downstream components. Additionally or alternatively, the downstream components can be configured to forgo processing the incoming sound data S_{D}, such as by the use of bypass tags or other techniques. In some examples, the downstream components (e.g., other components within the VCC 560, wake-word engine 570, voice extractor 572, network interface 224) can remain in a standby, disabled, or low-power state until voice activity is detected via the voice activity detector 550, at which point some or all of these downstream components can transition to a higher-power or fully operational state. When transitioning from the low-power, standby, or disabled stage to a fully operational stage, any number of components may be turned on, supplied power or additional power, taken out of standby or sleep stage, or otherwise activated in such a way that the enabled component(s) are allowed to draw more power than they could when disabled. With this arrangement, the NMD 503 can assume a relatively low-power stage while monitoring for speech activity via the voice activity detector 550. Unless and until the voice activity detector 550 identifies voice activity, the NMD 503 may remain in the low-power stage. In some examples, after transitioning to the higher-power or fully operational stage, the NMD 503 may revert to the low-power or standby stage once voice input is no longer detected via the voice activity detector 550, after a VAS interaction is determined to be concluded, and/or once a given period of time has elapsed.

The spatial processor 566 is typically configured to analyze the detected sound S_{D} and identify certain characteristics, such as a sound's amplitude (e.g., decibel level), frequency spectrum, directionality, etc. In one respect, the spatial processor 566 may help filter or suppress ambient noise in the detected sound S_{D} from potential user speech based on similarities and differences in the constituent channels 562 of the detected sound S_{D}, as discussed above. As one possibility, the spatial processor 566 may monitor metrics that distinguish speech from other sounds. Such metrics can include, for example, energy within the speech band relative to background noise and entropy within the speech band - a measure of spectral structure - which is typically lower in speech than in most common background noise. In some implementations, the spatial processor 566 may be configured to determine a speech presence probability, examples of such functionality are disclosed in U.S. Patent Application No. 15/984,073, filed May 18, 2018, titled "Linear Filtering for Noise-Suppressed Speech Detection," and U.S. Patent Application No. 16/147,710, filed September 29, 2018, and titled "Linear Filtering for Noise-Suppressed Speech Detection via Multiple Network Microphone Devices".

The wake-word engine 570 is configured to monitor and analyze received audio to determine if any wake words are present in the audio. The wake-word engine 570 may analyze the received audio using a wake word detection algorithm. If the wake-word engine 570 detects a wake word, a network microphone device may process voice input contained in the received audio. Example wake-word detection algorithms accept audio as input and provide an indication of whether a wake word is present in the audio. Many first- and third-party wake word detection algorithms are known and commercially available. For instance, operators of a voice service may make their algorithm available for use in third-party devices. Alternatively, an algorithm may be trained to detect certain wake-words.

In some examples, the wake-word engine 570 runs multiple wake word detection algorithms on the received audio simultaneously (or substantially simultaneously). As noted above, different voice services (e.g. AMAZON's Alexa^{®}, APPLE's Siri^{®}, MICROSOFT's Cortana^{®}, GOOGLE'S Assistant, etc.) each use a different wake word for invoking their respective voice service. To support multiple services, the wake-word engine 570 may run the received audio through the wake word detection algorithm for each supported voice service in parallel. In such examples, the network microphone device 103 may include VAS selector components 574 configured to pass voice input to the appropriate voice assistant service. In other examples, the VAS selector components 574 may be omitted. In some examples, individual NMDs 103 of the MPS 100 may be configured to run different wake word detection algorithms associated with particular VASes. For example, the NMDs of playback devices 102a and 102b of the Living Room may be associated with AMAZON's ALEXA^{®}, and be configured to run a corresponding wake word detection algorithm (e.g., configured to detect the wake word "Alexa" or other associated wake word), while the NMD of playback device 102f in the Kitchen may be associated with GOOGLE's Assistant, and be configured to run a corresponding wake word detection algorithm (e.g., configured to detect the wake word "OK, Google" or other associated wake word).

In some examples, a network microphone device may include speech processing components configured to further facilitate voice processing, such as by performing voice recognition trained to recognize a particular user or a particular set of users associated with a household. Voice recognition software may implement voice-processing algorithms that are tuned to specific voice profile(s).

In operation, the one or more buffers 568 - one or more of which may be part of or separate from the memory 213 (Figure 2A) - capture data corresponding to the detected sound S_{D}. More specifically, the one or more buffers 568 capture detected-sound data that was processed by the upstream voice activity detector 564, AEC 562, and spatial processor 566.

In general, the detected-sound data form a digital representation (i.e., sound-data stream), S_{DS}, of the sound detected by the microphones 222. In practice, the sound-data stream S_{DS} may take a variety of forms. As one possibility, the sound-data stream S_{DS} may be composed of frames, each of which may include one or more sound samples. The frames may be streamed (i.e., read out) from the one or more buffers 568 for further processing by downstream components, such as the wake-word engine 570 and the voice extractor 572 of the NMD 503.

In some implementations, at least one buffer 568 captures detected-sound data utilizing a sliding window approach in which a given amount (i.e., a given window) of the most recently captured detected-sound data is retained in the at least one buffer 568 while older detected-sound data are overwritten when they fall outside of the window. For example, at least one buffer 568 may temporarily retain 20 frames of a sound specimen at given time, discard the oldest frame after an expiration time, and then capture a new frame, which is added to the 19 prior frames of the sound specimen.

In practice, when the sound-data stream S_{DS} is composed of frames, the frames may take a variety of forms having a variety of characteristics. As one possibility, the frames may take the form of audio frames that have a certain resolution (e.g., 16 bits of resolution), which may be based on a sampling rate (e.g., 44,100 Hz). Additionally, or alternatively, the frames may include information corresponding to a given sound specimen that the frames define, such as metadata that indicates frequency response, power input level, signal-to-noise ratio, microphone channel identification, and/or other information of the given sound specimen, among other examples. Thus, in some examples, a frame may include a portion of sound (e.g., one or more samples of a given sound specimen) and metadata regarding the portion of sound. In other examples, a frame may only include a portion of sound (e.g., one or more samples of a given sound specimen) or metadata regarding a portion of sound.

The voice processor 560 can also include at least one lookback buffer among buffer(s) 568, which may be part of or separate from the memory 213 (Figure 2A). In operation, the lookback buffer can store sound metadata that is processed based on the detected-sound data S_{D} received from the microphones 222. As noted above, the microphones 222 can include a plurality of microphones arranged in an array. The sound metadata can include, for example: (1) frequency response data for individual microphones of the array, (2) an echo return loss enhancement measure (i.e., a measure of the effectiveness of the acoustic echo canceller (AEC) for each microphone), (3) a voice direction measure; (4) arbitration statistics (e.g., signal and noise estimates for the spatial processing streams associated with different microphones); and/or (5) speech spectral data (i.e., frequency response evaluated on processed audio output after acoustic echo cancellation and spatial processing have been performed). Other sound metadata may also be used to identify and/or classify noise in the detected-sound data S_{D}. In at least some examples, the sound metadata may be transmitted separately from the sound-data stream S_{DS}, as reflected in the arrow extending from the lookback buffer to the network interface 224. For example, the sound metadata may be transmitted from the lookback buffer to one or more remote computing devices separate from the VAS which receives the sound-data stream S_{DS}.

In any case, components of the NMD 503 downstream of the voice processor 560 may process the sound-data stream S_{DS}. For instance, the wake-word engine 570 can be configured to apply one or more identification algorithms to the sound-data stream S_{DS} (e.g., streamed sound frames) to spot potential wake words in the detected-sound S_{D}. When the wake-word engine 570 spots a potential wake word, the wake-word engine 570 can provide an indication of a "wake-word event" (also referred to as a "wake-word trigger") to the voice extractor 572 in the form of signal Sw.

In response to the wake-word event (e.g., in response to a signal Sw from the wake-word engine 570 indicating the wake-word event), the voice extractor 572 is configured to receive and format (e.g., packetize) the sound-data stream S_{DS}. For instance, the voice extractor 572 packetizes the frames of the sound-data stream S_{DS} into messages. The voice extractor 572 transmits or streams these messages, M_{V}, that may contain voice input in real time or near real time to a remote VAS, such as the VAS 190 (Figure 1B), via the network interface 224.

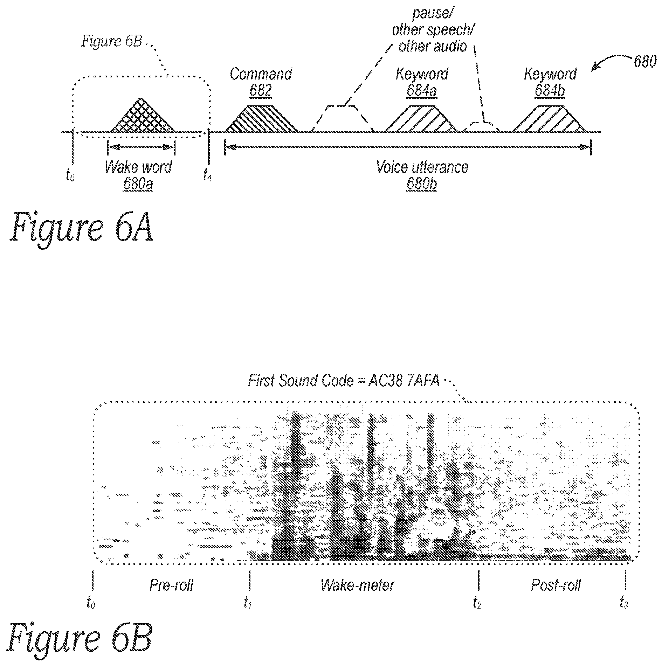

The VAS is configured to process the sound-data stream S_{DS} contained in the messages M_{V} sent from the NMD 503. More specifically, the VAS is configured to identify voice input based on the sound-data stream S_{DS}. Referring to Figure 6A, a voice input 680 may include a wake-word portion 680a and an utterance portion 680b. The wake-word portion 680a corresponds to detected sound that caused the wake-word event. For instance, the wake-word portion 680a corresponds to detected sound that caused the wake-word engine 570 to provide an indication of a wake-word event to the voice extractor 572. The utterance portion 680b corresponds to detected sound that potentially comprises a user request following the wake-word portion 680a.

As an illustrative example, Figure 6B shows an example first sound specimen. In this example, the sound specimen corresponds to the sound-data stream S_{DS} (e.g., one or more audio frames) associated with the spotted wake word 680a of Figure 6A. As illustrated, the example first sound specimen comprises sound detected in the playback device 102i's environment (i) immediately before a wake word was spoken, which may be referred to as a pre-roll portion (between times t₀ and t₁), (ii) while the wake word was spoken, which may be referred to as a wake-meter portion (between times t₁ and t₂), and/or (iii) after the wake word was spoken, which may be referred to as a post-roll portion (between times t₂ and t₃). Other sound specimens are also possible.

Typically, the VAS may first process the wake-word portion 680a within the sound-data stream S_{DS} to verify the presence of the wake word. In some instances, the VAS may determine that the wake-word portion 680a comprises a false wake word (e.g., the word "Election" when the word "Alexa" is the target wake word). In such an occurrence, the VAS may send a response to the NMD 503 (Figure 5) with an indication for the NMD 503 to cease extraction of sound data, which may cause the voice extractor 572 to cease further streaming of the detected-sound data to the VAS. The wake-word engine 570 may resume or continue monitoring sound specimens until another potential wake word, leading to another wake-word event. In some implementations, the VAS may not process or receive the wake-word portion 680a but instead processes only the utterance portion 680b.

In any case, the VAS processes the utterance portion 680b to identify the presence of any words in the detected-sound data and to determine an underlying intent from these words. The words may correspond to a certain command and certain keywords 684 (identified individually in Figure 6A as a first keyword 684a and a second keyword 684b). A keyword may be, for example, a word in the voice input 680 identifying a particular device or group in the MPS 100. For instance, in the illustrated example, the keywords 684 may be one or more words identifying one or more zones in which the music is to be played, such as the Living Room and the Dining Room (Figure 1A).

To determine the intent of the words, the VAS is typically in communication with one or more databases associated with the VAS (not shown) and/or one or more databases (not shown) of the MPS 100. Such databases may store various user data, analytics, catalogs, and other information for natural language processing and/or other processing. In some implementations, such databases may be updated for adaptive learning and feedback for a neural network based on voice-input processing. In some cases, the utterance portion 680b may include additional information, such as detected pauses (e.g., periods of non-speech) between words spoken by a user, as shown in Figure 6A. The pauses may demarcate the locations of separate commands, keywords, or other information spoke by the user within the utterance portion 680b.

Based on certain command criteria, the VAS may take actions as a result of identifying one or more commands in the voice input, such as the command 682. Command criteria may be based on the inclusion of certain keywords within the voice input, among other possibilities. Additionally, or alternatively, command criteria for commands may involve identification of one or more control-state and/or zone-state variables in conjunction with identification of one or more particular commands. Control-state variables may include, for example, indicators identifying a level of volume, a queue associated with one or more devices, and playback state, such as whether devices are playing a queue, paused, etc. Zone-state variables may include, for example, indicators identifying which, if any, zone players are grouped.

After processing the voice input, the VAS may send a response to the MPS 100 with an instruction to perform one or more actions based on an intent it determined from the voice input. For example, based on the voice input, the VAS may direct the MPS 100 to initiate playback on one or more of the playback devices 102, control one or more of these devices (e.g., raise/lower volume, group/ungroup devices, etc.), turn on/off certain smart devices, among other actions. After receiving the response from the VAS, the wake-word engine 570 the NMD 503 may resume or continue to monitor the sound-data stream S_{DS} until it spots another potential wake-word, as discussed above.

Referring back to Figure 5, in multi-VAS implementations, the NMD 503 may include a VAS selector 574 that is generally configured to direct the voice extractor's extraction and transmission of the sound-data stream S_{DS} to the appropriate VAS when a given wake-word is identified by a particular wake-word engine, such as the first wake-word engine 570a, the second wake-word engine 570b, or the additional wake-word engine(s) 570c. In such implementations, the NMD 503 may include multiple, different wake-word engines and/or voice extractors, each supported by a particular VAS. Similar to the discussion above, each wake-word engine may be configured to receive as input the sound-data stream S_{DS} from the one or more buffers 568 and apply identification algorithms to cause a wake-word trigger for the appropriate VAS. Thus, as one example, the first wake-word engine 570a may be configured to identify the wake word "Alexa" and cause the NMD 503 to invoke the AMAZON VAS when "Alexa" is spotted. As another example, the second wake-word engine 570b may be configured to identify the wake word "Hey Sonos" and cause the NMD 503 to invoke the SonosVAS when "Hey, Sonos" is spotted. In single-VAS implementations, the VAS selector 574 may be omitted.

In additional or alternative implementations, the NMD 503 may include a command keyword engine 576 that enables the NMD 503 to operate without the assistance of a remote VAS. As an example, such an engine 576 may identify in detected sound certain commands (e.g., "play," "pause," "turn on," etc.) and/or certain keywords or phrases, such as the unique name assigned to a given playback device (e.g., "Bookcase," "Patio," "Office," etc.). In response to identifying one or more of these commands, keywords, and/or phrases, the NMD 503 may communicate a signal (not shown in Figure 5) that causes the audio processing components 216 (Figure 2A) to perform one or more actions. For instance, when a user says "Hey Sonos, stop the music in the office," the NMD 503 may communicate a signal to the office playback device 102n, either directly, or indirectly via one or more other devices of the MPS 100, which causes the office device 102n to stop audio playback. Reducing or eliminating the need for assistance from a remote VAS may reduce latency that might otherwise occur when processing voice input remotely. In some cases, the identification algorithms employed may be configured to identify commands that are spoken without a preceding wake word. For instance, in the example above, the NMD 503 may employ an identification algorithm that triggers an event to stop the music in the office without the user first saying "Hey Sonos" or another wake word.

In some examples, the NMD 503 can be configured to interact with a local VAS. As used herein, a "local VAS" refers to a voice assistant service that runs locally on the NMD 503 and/or on other devices within the same environment (e.g., other devices connected over the same LAN). In some instances, a local VAS can perform processing of voice input locally (via the NMD 503 and/or other local devices) without sending voice recordings via a network interface to remote computing devices. In some examples, processed voice input can be used to generate commands which themselves can be performed locally (e.g., pausing media playback). In at least some instances, a local VAS may process the voice input locally to determine a user intent, which may then be used to generate commands that may require communication with remote computing devices (e.g., "play the Beatles"). Additional details regarding a local VAS, which may be used in conjunction with various examples of the present technology, can be found in commonly owned U.S. Patent No. 10,466,962, titled "Media Playback System with Voice Assistance," and U.S. Patent No. 11,138,975, titled "Locally Distributed Keyword Detection".

As noted above, the NMD 503 also includes a command-keyword engine 576 which can serve to process voice input locally and perform a limited set of actions in response to keywords detected therein. In the illustrated example, the command keyword engine 576 is downstream of the wake word engines 570. In this configuration, a user may speak a wake word associated with the local VAS, such as "Hey Sonos." In response, the user's voice input can be passed to the command keyword engine for detection of command keywords in the utterance. In alternative arrangements, the command keyword engine 576 can be arranged in parallel with the first and second wake-word engines 570, such that the sound data stream SDS is passed in parallel to both the wake-word engines 570 and the command keyword engine 576. In operation, the command-keyword engine 576 may apply one or more identification algorithms corresponding to one or more wake words. A "command-keyword event" can be generated when a particular command keyword is identified in the detected sound SD. In some cases, in contrast to the nonce words typically as utilized as VAS wake words, command keywords may function as both the activation word and the command itself. For instance, example command keywords may correspond to playback commands (e.g., "play," "pause," "skip," etc.) as well as control commands ("turn on"), among other examples. Under appropriate conditions, based on detecting one of these command keywords, the NMD 503 performs the corresponding command.

The command-keyword engine 576 can employ an automatic speech recognizer (ASR), which is configured to output phonetic or phonemic representations, such as text corresponding to words, based on sound in the sound-data stream SDS to text. For instance, the ASR may transcribe spoken words represented in the sound-data stream S_{DS} to one or more strings representing the voice input as text. The command-keyword engine 576 can feed ASR output to a local natural language unit (NLU) that identifies particular keywords as being command keywords for invoking command-keyword events, as described below.

### III. Example Conflict Management for Wake-Word Detection

As shown in Figure 5, the NMD 503 can include a wake-word conflict manager 580 that includes or is otherwise communicatively coupled with the various wake-word engines 570 (e.g., first wake-word engine 570a, second wake-word engine 570b, and/or one or more additional wake-word engines 570c). In operation, each of the wake-word engines 570 can separately process the incoming sound data stream S_{DS} for detection of a corresponding wake word. In some examples, each of the wake-word engines 570 can be configured to detect a different wake word or set of wake words. For example, the first wake-word engine 570a can be configured to detect the wake word "Hey Sonos" for invoking the SonosVAS, while the second wake-word engine 570b can be configured to detect the wake word "Alexa" for invoking the AMAZON VAS, and a third wake-word engine 570c can be configured to detect a different wake word for invoking the local command keyword engine 576 (e.g., to issue commands such as "stop," "skip," etc.).

In some examples, the wake-word conflict manager 580 can take the form of a wrapper function that encapsulates some or all of the various wake-word engines on the NMD 503. The conflict manager 580 can be configured to determine whether more than one wake-word event has occurred. Optionally, if multiple wake-word events occur within a predetermined period of time, then the conflict manager 580 can suppress further processing of the voice input. As noted previously, the detection of multiple distinct wake words within a relatively short period of time can indicate a high likelihood that at least one of the wake-word events is a false positive. This conflict manager 580 can therefore guard against false positives in which one of the wake-word engines 570 erroneously detects a wake word in the voice input. For example, a user utterance (or simply noise in the environment) may erroneously trigger both the first wake-word engine to detect the wake word "Hey Sonos" and issue a first wake-word event, while the second wake-word engine 570a detects the wake word "Alexa" and issue a second wake-word event. As these two wake-word events are in close in time, the wake-word conflict manager may suppress further processing of this voice input. In some examples, the wake-word conflict manager 580 can cause an output to be provided to the user, such as an audible response (e.g., "I'm sorry, could you repeat that?", a chime, etc.), a visible indication via a display, lights, or otherwise, or any other suitable output that informs a user that the voice input will not be further processed.

In addition to identifying the detection of two distinct wake words (e.g., determining that two distinct wake-word events have occurred), the conflict manager 580 can determine whether the two wake-word events occurred within a predetermined period of time. If so, then one or both wake-word events can be disregarded, indicating a likely false-positive detection. If, in contrast, the wake-word events are spaced apart by more than a predetermined period of time, then the conflict manager 580 can permit the downstream processing of each wake-word event. This may involve, for example, terminating a communication session with the first VAS following detection of the second wake-word associated with the second VAS. After terminating the communication session with the first VAS, the NMD may then initiate communication with the second VAS, including, for example transmitting captured sound data to the second VAS for processing. As one example, if a user invokes the AMAZON VAS at a first time, and 30 seconds later, invokes the Sonos VAS, the conflict manager may permit downstream processing of sound data following the SonosVAS wake-word event, as the greater separation in time increases the likelihood of a true-positive wake-word event.

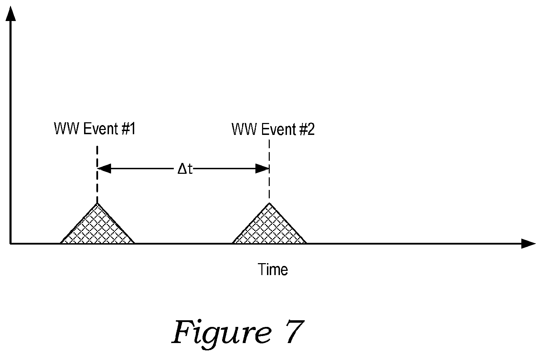

Figure 7 illustrates an example voice input in which two wake-word events occur within a period of time Δt. If the period of time Δt is less than a predetermined threshold, the wake-word conflict manager 580 can suppress further processing of the voice input. In various examples, the threshold time can be less than about 10 ms, 20 ms, 30 ms, 40 ms, 50 ms, 100 ms, 200 ms, 300 ms, 400 ms, 500 ms, 600 ms, 700 ms, 800 ms, 1 second or more. In some embodiments, suppressing further processing of the voice input can include one or more of: disregarding (e.g., ignoring, disabling, or de-activating) one or both of the wake-word engines, discarding the captured sound data, and/or ceasing to further capture sound data (optionally other than a continued brief rolling window used for new wake-word detection). In some examples, after expiry of a second period of time, the conflict manager 580 may re-enable one or both wake-word engines to detect additional user voice input. In various examples, the second period of time can be 1, 2, 3, 4, 5, 6, 7, 8, 9, 10, 20, 30, 60 seconds or more after the determination is made that two wake-word events occurred within the first period of time.

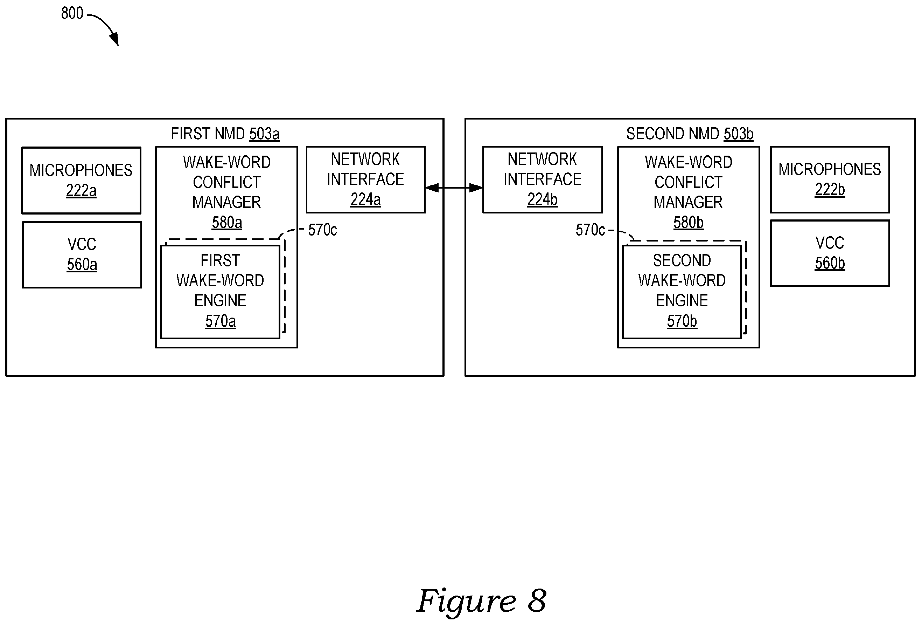

Figure 8 illustrates an example of media playback system 800 with wake-word conflict management among multiple discrete NMDs. As shown, a first NMD 503a and a second NMD 503b are in communication with one another via network interfaces 224a and 224b, and both may be sufficiently near a user to detect the user's voice input. In the illustrated example, each NMD 503 includes its own wake-word conflict manager 580a and 580b, respectively, as well as its own wake-word engine 570a and 570b, respectively. In this configuration, when either wake-word engine 570 detects a wake-word event, the wake-word conflict manager 580 can transmit an indication of the wake-word event to the other NMD. If the conflict manager 580b of the second NMD 503b determines both that (i) the first wake-word engine 570a of the first NMD 503a detected a wake word and that (ii) the second wake-word engine 570b of the second NMD 503b detected a wake word, the conflict manager 580b can suppress further processing of the voice input. Further, the second NMD 503b may transmit instructions to the first NMD 503a to suppress further processing of the voice input in view of the multiple wake-word events. In some cases, suppressing processing of the voice input is performed only if the two wake-word events occur within a predetermined time, as described previously herein. Additionally, after expiry of a period of time, the second NMD 503b may re-enable the second wake-word engine 570b and the first NMD 503a may re-enable the first wake-word engine 580a such that additional user voice input can be detected and processed.

In some instances, only one of the NMDs may detect the user's voice input. In some examples, the first NMD 503a may capture the user's voice input as sound data and both (i) process the sound data via its first wake-word engine 570a to detect a wake word and (ii) transmit the captured sound data to the second NMD 503b, which then processes the sound data via its second wake-word engine 570b to detect a wake word. As described above, if each wake-word engine detects a wake word, one or both can communicate the wake-word event to the other via the network interfaces 224, and if the wake-word events are deemed to have occurred within a predetermined period of time, the conflict managers 580 can disable one or both wake-word engines and suppress further processing of the user's voice input.

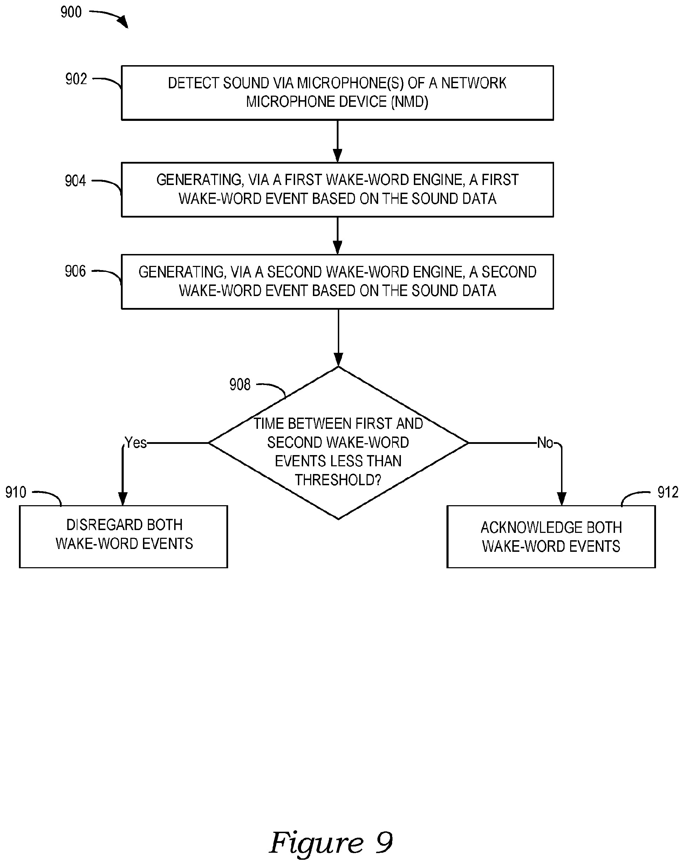

Figure 9 illustrates a schematic block diagram of a process 900 for managing conflict among wake-word detection processes. The process 900 can be implemented by any of the NMDs disclosed and/or described herein, or any other NMD now known or later developed. Various examples of process 900 include one or more operations, functions, and actions. Although the blocks are illustrated in sequential order, these blocks may also be performed in parallel, and/or in a different order than the order disclosed and described herein. Also, the various blocks may be combined into fewer blocks, divided into additional blocks, and/or removed based upon a desired implementation.

The process 900 begins in block 902 with detecting sound via one or more microphones of an NMD (e.g., NMD 503). In block 904, the NMD detects, via a first wake-word engine, a first wake word in the sound data and generates a first wake-word event, and in block 906 the NMD detects, via a second wake-word engine, a second wake word in the sound data and generates a second wake-word event. In some instances, the first wake word can be associated with a first VAS and the second wake word can be associated with a second VAS different from the first. In various examples, a single NMD may include multiple wake-word engines, or alternatively the various wake-word engines can be distributed among multiple different devices, whether in the local environment or as remote computing devices such as cloud servers.

In decision block 908, the process 900 determines whether the time between the first and wake-word events is less than a threshold amount of time. In various examples, the threshold time can be less than about 10 ms, 20 ms, 30 ms, 40 ms, 50 ms, 100 ms, 200 ms, 300 ms, 400 ms, 500 ms, 600 ms, 700 ms, 800 ms, 1 second or more. If, in decision block 908, the time between the wake-word events is less than the threshold, then the process 900 continues to block 910 with disregarding both the wake-word events. For example, the process can involve discarding both of the wake-word events issued by the first and second wake-word engines. This discarding can include, for example, taking no further action with respect to the captured sound data, and/or disabling or powering down both the first wake-word engine and the second wake-word engine. These steps can protect against undesirable actions caused by false positives, such as in the case of a user utterance or simply noise erroneously triggering both wake-word engines substantially simultaneously. By discarding the sound data in such circumstances, the device is precluded from undesirably having the two VASes crosstalk or having a user's voice input intended for one VAS be routed to a second VAS.

In some examples, the first and second wake-word engines can be temporarily disabled or powered down, after which they may be re-enabled. In at least some examples, the first and second wake word engines are re-enabled after expiry of a predetermined period of time. In various implementations, the period of time can be about 1, 2, 3, 4, 5, 6, 7, 8, 9, or 10 seconds or more. The period of time can be measured, for example, from the time the determination is made that two wake-word events occurred within the first period of time (block 908).

If, in decision block 908, the time between the wake words is not less than the threshold, then the process 900 continues to block 912 with acknowledging both wake-word events. For example, upon detecting the first wake-word, audio can be extracted and transmitted to a first VAS, and upon detecting the second wake-word at a second time beyond the threshold, transmission of the audio to the first VAS can be ceased and a communication session with the second VAS can be initiated.

### IV. Conclusion

The description above discloses, among other things, various example systems, methods, apparatus, and articles of manufacture including, among other components, firmware and/or software executed on hardware. It is understood that such examples are merely illustrative and should not be considered as limiting. For example, it is contemplated that any or all of the firmware, hardware, and/or software aspects or components can be embodied exclusively in hardware, exclusively in software, exclusively in firmware, or in any combination of hardware, software, and/or firmware. Accordingly, the examples provided are not the only way(s) to implement such systems, methods, apparatus, and/or articles of manufacture.

The specification is presented largely in terms of illustrative environments, systems, procedures, steps, logic blocks, processing, and other symbolic representations that directly or indirectly resemble the operations of data processing devices coupled to networks. These process descriptions and representations are typically used by those skilled in the art to most effectively convey the substance of their work to others skilled in the art. Numerous specific details are set forth to provide a thorough understanding of the present disclosure. However, it is understood to those skilled in the art that certain examples of the present disclosure can be practiced without certain, specific details. In other instances, well known methods, procedures, components, and circuitry have not been described in detail to avoid unnecessarily obscuring aspects of the examples. Accordingly, the scope of the present disclosure is defined by the appended claims rather than the forgoing description of examples.

When any of the appended claims are read to cover a purely software and/or firmware implementation, at least one of the elements in at least one example is hereby expressly defined to include a tangible, non-transitory medium such as a memory, DVD, CD, Blu-ray, and so on, storing the software and/or firmware.

## Claims

1. A method (900) comprising:
detecting (902) sound via one or more microphones (222) of at least one network microphone device (102);
in response to detecting the sound:
analyzing the sound via a first wake-word engine (570a) to detect a first wake word (680a) associated with a first voice assistant service, VAS (190);
analyzing the sound via a second wake-word engine (570b) to detect a second wake word (680b) associated with a second VAS;
determining whether both the first wake word and the second wake word are detected within a first period of time; and
when both wake words are detected within the first period of time:
temporarily disabling or powering down at least one of the first wake-word engine or the second wake-word engine for a second period of time; and
after expiry of the second period of time, re-enabling the at least one temporarily disabled or powered down wake-word engine.

2. The method of claim 1, wherein the first VAS comprises a remote voice assistant service implemented using one or more cloud servers, and wherein the second VAS comprises a local voice assistant service implemented on the at least one network microphone device.

3. The method of any one of the preceding claims, wherein temporarily disabling at least one of the first wake-word engine or the second wake-word engine comprises:
outputting an indication that no wake word was detected; and
discarding the detected sound without transmitting the detected sound to either the first VAS or the second VAS.

4. The method of any one of the preceding claims, wherein:
the at least one network microphone device comprises a first network microphone device and a second network microphone device;
analyzing the sound via the first wake-word engine comprises analyzing the sound at the first network microphone device; and
analyzing the sound via the second wake-word engine comprises analyzing the sound at the second network microphone device.

5. The method of claim 4, further comprising:
when the second network microphone device detects the second wake word, transmitting a message to the first network microphone device indicating detection of the second wake word; and
when both wake words are detected within the first period of time, transmitting a command from one of the network microphone devices to the other network microphone device to temporarily disable or power down its respective wake-word engine.

6. The method of any one of the preceding claims, wherein the first period of time is between 50 milliseconds and 1 second.

7. The method of any one of claims 1-5, wherein the second period of time is between 1 second and 30 seconds.

8. The method of any one of the preceding claims, further comprising, when both wake words are detected but not within the first period of time:
initiating a communication session with the first VAS in response to detecting the first wake word; and
upon detecting the second wake word after the first period of time:
terminating the communication session with the first VAS; and
initiating a communication session with the second VAS.

9. The method of any one of the preceding claims, wherein analyzing the sound via the first wake-word engine and analyzing the sound via the second wake-word engine comprises:
storing the detected sound in a buffer;
processing the stored sound using a first wake-word detection algorithm to detect the first wake word; and
processing the stored sound using a second wake-word detection algorithm to detect the second wake word.

10. The method of any one of the preceding claims, further comprising, prior to analyzing the sound via the first and second wake-word engines:
determining, via a voice activity detector, whether the detected sound comprises speech; and
enabling the first and second wake-word engines to analyze the sound only when speech is detected.

11. The method of any one of the preceding claims, wherein the at least one network microphone device comprises a playback device configured to:
render audio content received from a media playback service; and
adjust playback of the audio content in response to voice commands processed by at least one of the first VAS or second VAS.

12. The method of any one of the preceding claims, further comprising:
maintaining a rolling window of detected sound in a buffer while the at least one wake-word engine is temporarily disabled to enable wake-word detection after the second period of time expires.

13. One or more tangible, non-transitory, computer-readable media storing instructions that, when executed by one or more processors (212) of at least one network microphone device (102) comprising one or more microphones (222), cause the at least one network microphone device to perform the method of any one of the preceding claims.

14. A system comprising:
at least one network microphone device, NMD, (102) comprising one or more microphones (222);
one or more processors (212); and
data storage (213) having instructions thereon that, when executed by the one or more processors, cause the at least one NMD to perform the method of any one of claims 1-12.

## Patentansprüche

1. Verfahren (900), umfassend:
Detektieren (902) von Ton über ein oder mehrere Mikrofone (222) mindestens einer Netzwerkmikrofonvorrichtung (102);
als Reaktion auf das Detektieren des Tons:
Analysieren des Tons über eine erste Weckwort-Engine (570a), um ein erstes Weckwort (680a) zu detektieren, das einem ersten Sprachassistenzdienst, VAS (190), zugeordnet ist;
Analysieren des Tons über eine zweite Weckwort-Engine (570b), um ein zweites Weckwort (680b) zu detektieren, das einem zweiten VAS zugeordnet ist;
Bestimmen, ob sowohl das erste Weckwort als auch das zweite Weckwort innerhalb einer ersten Zeitspanne detektiert werden; und
wenn beide Weckwörter innerhalb der ersten Zeitspanne detektiert werden:
vorübergehendes Sperren oder Abschalten mindestens einer der ersten Weckwort-Engine oder der zweiten Weckwort-Engine für eine zweite Zeitspanne; und
nach Ablauf der zweiten Zeitspanne, Wiederfreigeben der mindestens einen vorübergehend gesperrten oder abgeschalteten Weckwort-Engine.

2. Verfahren nach Anspruch 1, wobei der erste VAS einen entfernten Sprachassistenzdienst umfasst, der unter Verwendung eines oder mehrerer Cloud-Server implementiert ist, und wobei der zweite VAS einen lokalen Sprachassistenzdienst umfasst, der auf der mindestens einen Netzwerkmikrofonvorrichtung implementiert ist.

3. Verfahren nach einem der vorstehenden Ansprüche, wobei das vorübergehende Sperren mindestens einer der ersten Weckwort-Engine oder der zweiten Weckwort-Engine umfasst:
Ausgeben einer Anzeige, dass kein Weckwort detektiert wurde; und
Verwerfen des detektierten Tons, ohne den detektierten Ton an weder den ersten VAS noch den zweiten VAS zu übertragen.

4. Verfahren nach einem der vorstehenden Ansprüche, wobei:
die mindestens eine Netzwerkmikrofonvorrichtung eine erste Netzwerkmikrofonvorrichtung und eine zweite Netzwerkmikrofonvorrichtung umfasst;
das Analysieren des Tons über die erste Weckwort-Engine das Analysieren des Tons an der ersten Netzwerkmikrofonvorrichtung umfasst; und
das Analysieren des Tons über die zweite Weckwort-Engine das Analysieren des Tons an der zweiten Netzwerkmikrofonvorrichtung umfasst.

5. Verfahren nach Anspruch 4, ferner umfassend:
wenn die zweite Netzwerkmikrofonvorrichtung das zweite Weckwort detektiert, Übertragen einer Nachricht an die erste Netzwerkmikrofonvorrichtung, die die Detektion des zweiten Weckworts anzeigt; und
wenn beide Weckwörter innerhalb der ersten Zeitspanne detektiert werden, Übertragen eines Befehls von einer der Netzwerkmikrofonvorrichtungen an die andere Netzwerkmikrofonvorrichtung, um ihre jeweilige Weckwort-Engine vorübergehend zu sperren oder abzuschalten.

6. Verfahren nach einem der vorstehenden Ansprüche, wobei die erste Zeitspanne zwischen 50 Millisekunden und 1 Sekunde beträgt.

7. Verfahren nach einem der Ansprüche 1 bis 5, wobei die zweite Zeitspanne zwischen 1 Sekunde und 30 Sekunden beträgt.

8. Verfahren nach einem der vorstehenden Ansprüche, ferner umfassend, wenn beide Weckwörter detektiert werden, aber nicht innerhalb der ersten Zeitspanne:
Initiieren einer Kommunikationssitzung mit dem ersten VAS als Reaktion auf das Detektieren des ersten Weckworts; und
bei Detektieren des zweiten Weckworts nach der ersten Zeitspanne:
Beenden der Kommunikationssitzung mit dem ersten VAS; und
Initiieren einer Kommunikationssitzung mit dem zweiten VAS.

9. Verfahren nach einem der vorstehenden Ansprüche, wobei das Analysieren des Tons über die erste Weckwort-Engine und das Analysieren des Tons über die zweite Weckwort-Engine umfasst:
Speichern des detektierten Tons in einem Puffer;
Verarbeiten des gespeicherten Tons unter Verwendung eines ersten Weckwortdetektionsalgorithmus, um das erste Weckwort zu detektieren; und
Verarbeiten des gespeicherten Tons unter Verwendung eines zweiten Weckwortdetektionsalgorithmus, um das zweite Weckwort zu detektieren.

10. Verfahren nach einem der vorstehenden Ansprüche, ferner umfassend, vor dem Analysieren des Tons über die erste und die zweite Weckwort-Engine:
Bestimmen, über einen Sprachaktivitätsdetektor, ob der detektierte Ton Sprache umfasst; und
Freigeben der ersten und der zweiten Weckwort-Engine, um den Ton nur zu analysieren, wenn Sprache detektiert wird.

11. Verfahren nach einem der vorstehenden Ansprüche, wobei die mindestens eine Netzwerkmikrofonvorrichtung eine Wiedergabevorrichtung umfasst, die konfiguriert ist zum:
Abspielen von Audioinhalt, der von einem Medienwiedergabedienst empfangen wird; und
Anpassen der Wiedergabe des Audioinhalts in Reaktion auf Sprachbefehle, die durch mindestens einen des ersten VAS oder des zweiten VAS verarbeitet werden.

12. Verfahren nach einem der vorstehenden Ansprüche, ferner umfassend:
Aufrechterhalten eines gleitenden Fensters von detektiertem Ton in einem Puffer, während die mindestens eine Weckwort-Engine vorübergehend gesperrt ist, um die Weckwortdetektion freizugeben, nachdem die zweite Zeitspanne abgelaufen ist.

13. Ein oder mehrere greifbare, nichtflüchtige, computerlesbare Medien, die Anweisungen speichern, die, wenn sie durch einen oder mehrere Prozessoren (212) mindestens einer Netzwerkmikrofonvorrichtung (102), umfassend ein oder mehrere Mikrofone (222), ausgeführt werden, die mindestens eine Netzwerkmikrofonvorrichtung veranlassen, das Verfahren nach einem der vorstehenden Ansprüche durchzuführen.

14. System, umfassend:
mindestens eine Netzwerkmikrofonvorrichtung, NMD, (102), umfassend ein oder mehrere Mikrofone (222);
einen oder mehrere Prozessoren (212); und
einen Datenspeicher (213), der Anweisungen darin aufweist, die, wenn sie durch den einen oder die mehreren Prozessoren ausgeführt werden, die mindestens eine NMD veranlassen, das Verfahren nach einem der Ansprüche 1 bis 12 durchzuführen.

## Revendications

1. Procédé (900) comprenant :
la détection (902) de son par l'intermédiaire d'un ou plusieurs microphones (222) d'au moins un dispositif de microphone en réseau (102) ;
en réponse à la détection du son :
l'analyse du son par l'intermédiaire d'un premier moteur de mot d'éveil (570a) pour détecter un premier mot d'éveil (680a) associé à un premier service d'assistant vocal, VAS (190) ;
l'analyse du son par l'intermédiaire d'un second moteur de mot d'éveil (570b) pour détecter un second mot d'éveil (680b) associé à un second VAS ;
le fait de déterminer si le premier mot d'éveil et le second mot d'éveil sont tous deux détectés dans un premier laps de temps ; et
lorsque les deux mots d'éveil sont détectés dans le premier laps de temps :
la désactivation ou mise hors tension temporaire d'au moins l'un parmi le premier moteur de mot d'éveil ou le second moteur de mot d'éveil pendant un second laps de temps ; et
après l'expiration du second laps de temps, la réactivation de l'au moins un moteur de mot d'éveil temporairement désactivé ou mis hors tension.

2. Procédé selon la revendication 1, dans lequel le premier VAS comprend un service d'assistant vocal distant mis en œuvre à l'aide d'un ou plusieurs serveurs en nuage, et dans lequel le second VAS comprend un service d'assistant vocal local mis en œuvre sur l'au moins un dispositif de microphone en réseau.

3. Procédé selon l'une quelconque des revendications précédentes, dans lequel la désactivation temporaire d'au moins l'un parmi le premier moteur de mot d'éveil ou le second moteur de mot d'éveil comprend :
la fourniture d'une indication selon laquelle aucun mot d'éveil n'a été détecté ; et
la mise au rebut du son détecté sans transmettre le son détecté ni au premier VAS ni au second VAS.

4. Procédé selon l'une quelconque des revendications précédentes, dans lequel :
l'au moins un dispositif de microphone en réseau comprend un premier dispositif de microphone en réseau et un second dispositif de microphone en réseau ;
l'analyse du son par l'intermédiaire du premier moteur de mot d'éveil comprend l'analyse du son au niveau du premier dispositif de microphone en réseau ; et
l'analyse du son par l'intermédiaire du second moteur de mot d'éveil comprend l'analyse du son au niveau du second dispositif de microphone en réseau.

5. Procédé selon la revendication 4, comprenant en outre :
lorsque le second dispositif de microphone en réseau détecte le second mot d'éveil, la transmission d'un message au premier dispositif de microphone en réseau indiquant la détection du second mot d'éveil ; et
lorsque les deux mots d'éveil sont détectés dans le premier laps de temps, la transmission d'une commande de l'un parmi les dispositifs de microphone en réseau à l'autre dispositif de microphone en réseau pour désactiver ou mettre hors tension temporairement son moteur de mot d'éveil respectif.

6. Procédé selon l'une quelconque des revendications précédentes, dans lequel le premier laps de temps est compris entre 50 millisecondes et 1 seconde.

7. Procédé selon l'une quelconque des revendications 1 à 5, dans lequel le second laps de temps est compris entre 1 seconde et 30 secondes.

8. Procédé selon l'une quelconque des revendications précédentes, comprenant en outre, lorsque les deux mots d'éveil sont détectés mais pas dans le premier laps de temps :
l'initiation d'une session de communication avec le premier VAS en réponse à la détection du premier mot d'éveil ; et
lors de la détection du second mot d'éveil après le premier laps de temps :
le fait de mettre fin à la session de communication avec le premier VAS ; et
l'initiation d'une session de communication avec le second VAS.

9. Procédé selon l'une quelconque des revendications précédentes, dans lequel l'analyse du son par l'intermédiaire du premier moteur de mot d'éveil et l'analyse du son par l'intermédiaire du second moteur de mot d'éveil comprend :
le stockage du son détecté dans une mémoire tampon ;
le traitement du son stocké à l'aide d'un premier algorithme de détection de mot d'éveil pour détecter le premier mot d'éveil ; et
le traitement du son stocké à l'aide d'un second algorithme de détection de mot d'éveil pour détecter le second mot d'éveil.

10. Procédé selon l'une quelconque des revendications précédentes, comprenant en outre, avant d'analyser le son par l'intermédiaire des premier et second moteurs de mot d'éveil :
le fait de déterminer, par l'intermédiaire d'un détecteur d'activité vocale, si le son détecté comprend de la parole ; et
le fait de permettre aux premier et second moteurs de mot d'éveil d'analyser le son uniquement lorsque de la parole est détectée.

11. Procédé selon l'une quelconque des revendications précédentes, dans lequel l'au moins un dispositif de microphone en réseau comprend un dispositif de lecture conçu pour :
restituer un contenu audio reçu d'un service de lecture multimédia ; et
ajuster la lecture du contenu audio en réponse à des commandes vocales traitées par au moins l'un parmi le premier VAS ou le second VAS.

12. Procédé selon l'une quelconque des revendications précédentes, comprenant en outre :
le maintien d'une fenêtre glissante de son détecté dans une mémoire tampon tandis que l'au moins un moteur de mot d'éveil est temporairement désactivé pour permettre la détection de mot d'éveil après l'expiration du second laps de temps.

13. Un ou plusieurs supports tangibles, non transitoires, lisibles par ordinateur, stockant des instructions qui, lorsqu'elles sont exécutées par un ou plusieurs processeurs (212) d'au moins un dispositif de microphone en réseau (102) comprenant un ou plusieurs microphones (222), amènent l'au moins un dispositif de microphone en réseau à réaliser le procédé selon l'une quelconque des revendications précédentes.

14. Système comprenant :
au moins un dispositif de microphone en réseau, NMD, (102) comprenant un ou plusieurs microphones (222) ;
un ou plusieurs processeurs (212) ; et
un stockage de données (213) comportant des instructions sur celui-ci qui, lorsqu'elles sont exécutées par le ou les processeurs, amènent l'au moins un NMD à réaliser le procédé selon l'une quelconque des revendications 1 à 12.
